(19) **Europäisches Patentamt / European Patent Office / Office européen des brevets**

(11) **EP 1 815 491 B1**

(12) **EUROPEAN PATENT SPECIFICATION**

(45) Date of publication and mention of the grant of the patent:
**21.12.2011 Bulletin 2011/51**

(21) Application number: **05811208.7**

(22) Date of filing: **28.11.2005**

(51) Int Cl.:
$H01J\ 1/304^{(2006.01)}$

(86) International application number:
**PCT/JP2005/022244**

(87) International publication number:
**WO 2006/057459 (01.06.2006 Gazette 2006/22)**

(54) **FIELD EMISSION ELECTRODE, MANUFACTURING METHOD THEREOF, AND ELECTRONIC DEVICE**

FELDEMISSIONSELEKTRODE, HERSTELLUNGSVERFAHREN DAFÜR UND ELEKTRONISCHE EINRICHTUNG

ELECTRODE D'EMISSION DE CHAMP, SON PROCEDE DE FABRICATION ET DISPOSITIF ELECTRONIQUE

(84) Designated Contracting States:
**DE FR GB**

(30) Priority: **26.11.2004 JP 2004343203**
**31.08.2005 JP 2005252928**
**13.10.2005 JP 2005299468**

(43) Date of publication of application:
**08.08.2007 Bulletin 2007/32**

(73) Proprietors:
• **Kochi Industrial Promotion Center**
**Kochi-shi, Kochi 781-5101 (JP)**
• **CASIO COMPUTER CO., LTD.**
**Shibuya-ku,**
**Tokyo 151-8543 (JP)**

(72) Inventors:
• **NISHIMURA, Kazuhito,**
**c/o Kochi Industr. Promot. Center**
**Kochi-shi,**
**Kochi 781-5101 (JP)**

• **SASAOKA, Hideki,**
**c/o Kochi Industr. Promot. Center**
**Kochi-shi,**
**Kochi 781-5101 (JP)**

(74) Representative: **Grünecker, Kinkeldey,**
**Stockmair & Schwanhäusser**
**Leopoldstrasse 4**
**80802 München (DE)**

(56) References cited:
**US-A- 5 900 301          US-A1- 2001 024 078**
**US-A1- 2004 178 713**

• **JAYATISSA A H ET AL: "ENHANCED FIELD EMISSION CURRENT FROM DIAMOND-LIKE CARBON FILMS DEPOSITED BY LASER ABLATION OF C60 FULLERENE" JOURNAL OF PHYSICS D. APPLIED PHYSICS, IOP PUBLISHING, BRISTOL, GB, vol. 32, 1999, pages 1443-1446, XP007900678 ISSN: 0022-3727**

**Description**

Technical Field

The present invention relates to a field emission electrode which emits electrons by field emission, a manufacturing method thereof, and an electronic device.

Background Art

Field-emission cold cathodes can emit electrons into a vacuum space by applying an electric field to their emitter, and have gained attention as electron emission elements to replace hot cathodes. Various researches have been made to achieve a smaller threshold field intensity (a field intensity which will cause an emission current of $1mA/cm^2$) and more stability and uniformity of emission currents.

Techniques for improving the electron emission characteristic of a field emission cold cathode have roughly two tendencies.

One is to make searches into the structures of electron emission materials to achieve a structure for a more enhanced electric field concentration. By sharpening the tip of an electron emission material from which electrons are to be emitted, a strong electric field that can pull out electrons is formed near the tip, which allows electrons to be emitted at a low applied voltage. Hence, many reports about applications of carbon nano tube (hereinafter referred to as CNT), carbon nano fiber, etc. as field-emission type electron emission elements have been made so far. Carbon nano tube is a carbon material with sharp tips that has a minute structure of a nanometer size with a high aspect ratio.

Unexamined Japanese Patent Application KOKAI Publication No. 2003-59391 discloses a manufacturing method of a field emission cold cathode using CNT.

According to this manufacturing method, a substrate to serve as the electron emission electrode is etched to be provided with bosses and recesses thereon, and the surface of the bosses is covered with a conductive material such as Al and then has CNT adhered thereon. After grains of the CNT, which has been produced aside from the substrate by arc discharge, are adhered to the bosses of the substrate by electrophoresis, the conductive material is melted to flow into clearances of the CNT.

The other tendency for improving the electron emission characteristic of the field emission cold cathode is to reduce the potential barrier near the surface of the electron emission material, which is the site to emit electrons therefrom.

It is effective for this purpose to use a material having a small electric affinity as the electron emission material. Especially, diamond has not only negative electron affinity but also a high degree of hardness, and thus is chemically stable. Diamond is therefore suitable as the material for electron emission elements.

However, in case of an electron emission element made of diamond, the higher the crystallinity of diamond is, the lower the basic electric conductivity is, giving rise to a problem that a favorable electric contact is hard to obtain between the diamond and the substrate serving also as an electrode.

To deal with this problem, Unexamined Japanese Patent Application KOKAI Publication No. H9-161655 teaches incorporating impurities such as nitrogen in diamond thereby to improve the electron emission characteristic.

The structure for enhancing the field concentration can have a higher field concentration as the shape of the tip as the electron emission site is sharper, but becomes so less durable. The technique of Unexamined Japanese Patent Application KOKAI Publication No. 2003-59391 has to undergo complicated manufacturing steps after production of the CNT, and suffers a problem that the ratio of CNT that adheres with respect to the yield is low because the CNT grains are physically moved in the dispersion liquid by electrophoresis.

On the other hand, the electron emission element made of diamond is highly durable because of its rigid crystalline structure and is less liable to deteriorate. Furthermore, diamond has a low work function and thus can emit electrons with a low field concentration.

However, the high electric resistivity of diamond is an obstacle against meeting a condition of a field intensity of $1V/\mu m$ or less at a current density of $1mA/cm^2$, which is one standard in promoting practical use of electron emission elements. This obstacle cannot have been counteracted so far by any of the enhancement of field concentration by improving the surface structure of the emitter film, impartment of a lower resistivity to diamond by doping impurities, improvement of the electric contact between diamond and the conductive substrate.

Accordingly, an object of the present invention is to provide a field emission electrode easy to manufacture and having a high current density at a low field intensity, a manufacturing method of such an electrode, and an electronic device.

The following documents disclose known electron-emitting devices. The electron-emitting device of US 5 900 301 teaches distributing electron-emissive carbon-containing particles over a non-insulating region. The particles can be made electron emissive after the particle distributing step. Particle bonding material is typically provided to bond the particles to the non-insulating region. The particle bonding material can include carbide formed by heating or/and can be created by modifying a layer provided between the non-insulating region and the particles. US 2001/024078 discloses a nanotube coated with diamond or diamond-like carbon, a field emitter cathode comprising same, and a field emitter comprising the cathode. It is also directed to a method of preventing the evaporation of carbon from a field emitter comprising a cathode comprised of nanotubes by coating the nanotube with diamond or diamond-like carbon. US 2004/178713 discloses an emitter composition of a field emission cell that is printed on a cathode substrate of a display to be applied to an electron emission source, including a carbon nanotube, a binder, glass frit, a dispersing agent and an organic solvent, characterized by further having 0.1-20 w % of diamond. Further, a manufacturing method of the emitter composition and a field emission cell using the emitter composition are also provided. JAYATISSA A H ET AL ("ENHANCED FIELD EMISSION CURRENT FROM DIAMOND-LIKE CARBON FILMS DEPOSITED BY LASER ABLATION OF C60 FULLERENE" JOURNAL OF PHYSICS D. APPLIED PHYSICS, IOP PUBLISHING, BRISTOL, GB, vol. 32, 1999, pages 1443-1446) show that carbon films deposited by pulsed ArF laser ablation of a $C_{60}$ fullerene target have a higher electric field emission current than those films deposited using graphite.

Disclosure of Invention

To achieve the above object, a field emission electrode according to the present invention comprises an electron emission film including a plurality of diamond fine grains having a grain diameter of 5nm to 10 nm.
Another field emission electrode according to the present invention comprises an electron emission film including a plurality of diamond fine grains and having a ratio (D-band intensity)/(G-band intensity) of 2.5 to 2.7.
Another field emission electrode according to the present invention comprises:

an electron emission film including a plurality of diamond fine grains; and
sticks formed on a surface of the electron emission film.

A manufacturing method of a field emission electrode according to the present invention comprises a step of supplying a material gas which includes carbon in its composition into a process chamber to generate plasma in the process chamber, and forming an electron emission film including a plurality of diamond fine grains on a substrate in the process chamber.
Another manufacturing method of a field emission electrode according to the present invention comprises:

a step of supplying a material gas which includes carbon in its composition into a process chamber to generate plasma in the process chamber, and forming a layer of carbon-nanowall on a substrate in the process chamber; and
a step of forming an electron emission film including a plurality of diamond fine grains on the layer of carbon-nanowall.

Another manufacturing method of a field emission electrode according to the present invention comprises a step of supplying a material gas which includes a compound containing carbon in its composition into a process chamber to generate plasma in the process chamber, thereby forming an electron emission film including a plurality of diamond fine grains, and sticks disposed on a surface of the electron emission film.
An electronic device according to the present invention comprises:

a field emission electrode which comprises an electron emission film including a plurality of diamond fine grains having a grain diameter of 5nm to 10nm;
an opposite electrode which is provided so as to face the field emission electrode; and
a fluorescent film which emits light by electrons emitted from the field emission electrode.

Another electronic device according to the present invention comprises:

a field emission electrode which comprises an electron emission film including a plurality of diamond fine grains and having a ratio (D-band intensity)/(G-band intensity) of 2.5 to 2.7;
an opposite electrode which faces the field emission electrode; and
a fluorescent film which emits light by electrons which are field-emitted from the field emission electrode.

Another electronic device according to the present invention comprises:

a field emission electrode which comprises an electron emission film including a plurality of diamond fine grains and having a ratio (carbon having $sp^3$ bonds)/(carbon having $sp^2$ bonds) of 2.5 to 2.7;
an opposite electrode which faces the field emission electrode; and
a fluorescent film which emits light by electrons which are field-emitted from the field emission electrode.

Another electronic device according to the present invention comprises:

a field emission electrode which comprises an electron emission film including a plurality of diamond fine grains and having resistivity of 1kΩ·cm to 18kΩ·cm;
an opposite electrode which faces the field emission electrode; and
a fluorescent film which emits light by electrons which are field-emitted from the field emission electrode.

Another electronic device according to the present invention comprises:

a field emission electrode which comprises an electron emission film including a plurality of diamond fine grains, and sticks formed on a surface of the electron emission film;
an opposite electrode which is formed so as to face the field emission electrode; and
a fluorescent film which emits light by electrons emitted from the field emission electrode.

A field emission electrode or an electronic device according to the present invention can realize field emission having a high current density at a low field intensity.

Brief Description of Drawings

These objects and other objects and advantages of the present invention will become more apparent upon reading of the following detailed description and the accompanying drawings in which:

FIG. 1 is a scanned image of the surface of an electron emission film according to the embodiment 1 of the present invention, obtained by a scanning electron microscope;
FIG. 2 is an image showing specular reflection on the electron emission film;
FIG. 3 is a secondary electron image showing a cross section of the electron emission film and a substrate;
FIG. 4 is a diagram showing an X-ray diffraction pattern of an electron emission film;
FIG. 5 is a diagram showing a Raman spectroscopy spectrum of the electron emission film;
FIG. 6 is a diagram showing a DC plasma CVD system;
FIG. 7 is a diagram showing the electron emission characteristic of a field emission cold cathode comprising the electron emission film and substrate;
FIG. 8 is a schematic cross section of,an electronic device constituted by a field emission fluorescent tube comprising a field emission electrode including the electron emission film;
FIG. 9 is a diagram showing the current-voltage characteristic of the electron emission film according to the embodiment 1;
FIG. 10 is a diagram showing a state of light emission by a fluorescent plate, caused by electron emission from the electron emission film;
FIG. 11 is a model diagram schematically showing an electron emission film according to the embodiment 2 of the present invention;
FIG. 12 is an image obtained by scanning the surface of the electron emission film of FIG. 11 by using a scanning electron microscope;
FIG. 13 is an expanded image of the electron emission film of FIG. 12;
FIG. 14 is a secondary electron image showing a cross section of the electron emission film of FIG. 11 and a carbon-nanowall;
FIG. 15 is a diagram showing an X-ray diffraction pattern of the electron emission film;
FIG. 16 is a diagram showing a Raman spectroscopy spectrum of the carbon-nanowall;
FIG. 17 is a diagram showing the electron emission characteristic of a field emission cold cathode comprising the electron emission film and carbon-nanowall;
FIG. 18 is a schematic cross section of an electronic device constituted by a field emission fluorescent tube comprising a field emission electrode including the electron emission film;
FIG. 19 is a diagram showing a Raman spectrum of a carbon film including aggregates of a plurality of diamond fine grains, which is to be the electron emission film according to the embodiment 1 and embodiment 2;
FIG. 20 is a schematic cross section showing a structure model of the electron emission film shown in FIG. 3;
FIG. 21 is a schematic cross section showing a structure model of the electron emission film shown in FIG. 11;
FIG. 22 is a diagram showing the field emission characteristic of the electron emission film according to the present invention and of a carbon-nanowall according to a comparative example;
FIGS. 23A and 23B show images of the electron emission film;
FIGS. 24A to 24E show expanded image of some regions of the electron emission film;

EP 1 815 491 B1

FIG. 25 is a diagram showing a ratio (carbon having $sp^3$ bonds)/(carbon having $sp^2$ bonds) at each position of the electron emission film shown in FIG. 24A;

FIG. 26 is a graph showing the relationship between the ratio (carbon having $sp^3$ bonds)/(carbon having $sp^2$ bonds) and resistivity;

FIGS. 27A to 27D are images showing states of light emission by electron emission films having different resistivities;

FIG. 28 is a schematic cross section of a fluorescent tube empolying a field emission electrode including the field emission film according to the present invention;

FIG. 29 is a diagram showing a fluorescent tube comprising a field emission electrode according to the embodiment 3;

FIG. 30 is an image showing a cross section of the field emission electrode;

FIG. 31 is an image of the surface of an electron emission film;

FIG. 32 is an image obtained by expanding the surface of the electron emission film of FIG. 31;

FIG. 33 is a model diagram showing an expanded cross section of the electron emission film including a bamboo-leaf-like shape shown in FIG. 32;

FIG. 34 is a diagram showing an X-ray diffraction spectrum of the electron emission film;

FIG. 35 is a diagram showing a Raman spectroscopy spectrum of the electron emission film;

FIG. 36 is a diagram showing a Raman spectroscopy spectrum of a carbon-nanowall;

FIG. 37 is an image of a cross section of the field emission electrode;

FIG. 38 is an expanded image of FIG. 37;

FIG. 39 is an image of a stick;

FIG. 40 is an expanded image of the stick;

FIGS. 41A and 41B show an image of the electron emission film and a photographed image of a light emission state;

FIGS. 42A and 42B show an image of an electron emission film and a photographed image of a voltage applied state;

FIG. 43 is a diagram showing measured current densities of a fluorescent tube with sticks shown in FIG. 41B, and measured current densities of a fluorescent tube without sticks shown in FIG. 42B;

FIGS. 44A and 44B are schematic diagrams showing the field emission characteristics of the sticks and electron emission film;

FIGS. 45A and 45B are an image showing a state of light emission by a fluorescent tube in a case where the density of the number of sticks is 5000sticks/mm$^2$ to 15000sticks/mm$^2$, and a photographed image of the surface of the electron emission film obtained by a scanning electron microscope;

FIGS. 46A and 46B are an image showing a state of light emission by a fluorescent tube in a case where the density of the number of sticks is 15000sticks/mm$^2$ to 25000sticks/mm$^2$, and a photographed image of the surface of the electron emission film obtained by a scanning electron microscope;

FIGS. 47A and 47B are an image showing a state of light emission by a fluorescent tube in a case where the density of the number of sticks is 45000sticks/mm$^2$ to 55000sticks/mm$^2$, and a photographed image of the surface of the electron emission film obtained by a scanning electron microscope;

FIGS. 48A and 48B are an image showing a state of light emission by a fluorescent tube in a case where the density of the number of sticks is 65000sticks/mm$^2$ to 75000sticks/mm$^2$, and a photographed image of the surface of the electron emission film obtained by a scanning electron microscope;

FIG. 49 is a diagram showing a manufacturing apparatus for the electron emission electrode according to the embodiment 3;

FIG. 50 is a diagram showing the emissivity of the surfaces where the carbon-nanowall and electron emission film of the field emission electrode according to the embodiment 3 are being formed;

FIGS. 51A to 51D are an image showing a state of light emission by a fluorescent tube employing the electron emission film, a photographed image of the surface of the electron emission film, a photographed image of the surface of the electron emission film, and a photographed image of a cross section of the field emission electrode;

FIGS. 52A to 52D are an image showing a state of light emission by a fluorescent tube employing the electron emission film, a photographed image of the surface of the electron emission film, a photographed image of the surface of the electron emission film, and a photographed image of a cross section of the field emission electrode;

FIGS. 53A to 53D are an image showing a state of light emission by a fluorescent tube employing the electron emission film, a photographed image of the surface of the electron emission film, a photographed image of the surface of the electron emission film, and a photographed image of a cross section of the field emission electrode;

FIGS. 54A to 54E are an image showing a state of light emission by a fluorescent tube employing the electron emission film, a photographed image of the surface of the electron emission film at its central portion, a photographed image of the surface of the electron emission film, a photographed image of a cross section of the field emission electrode, and a photographed image of the surface of the electron emission film at its edge portion;

FIG. 55 is a model diagram of a cross section showing an electron emission film directly formed on a substrate; and

FIG. 56 is an electron diffraction image of the sticks according to the embodiment 3.

Best Mode for Carrying Out the Invention

The embodiments of the present invention will now be specifically explained with reference to the drawings.

[Embodiment 1]

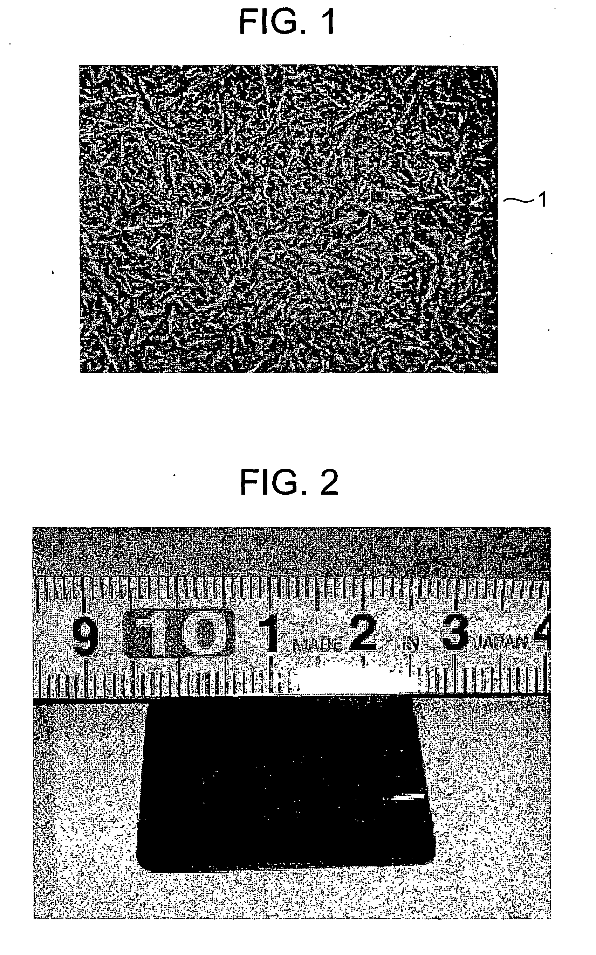

FIG. 1 is an image obtained by scanning the surface of a diamond thin film, as the electron emission portion of a field emission electrode according to the embodiment 1 of the present invention, by using a scanning electron microscope.

FIG. 2 is an image showing specular reflection on the electron emission film.

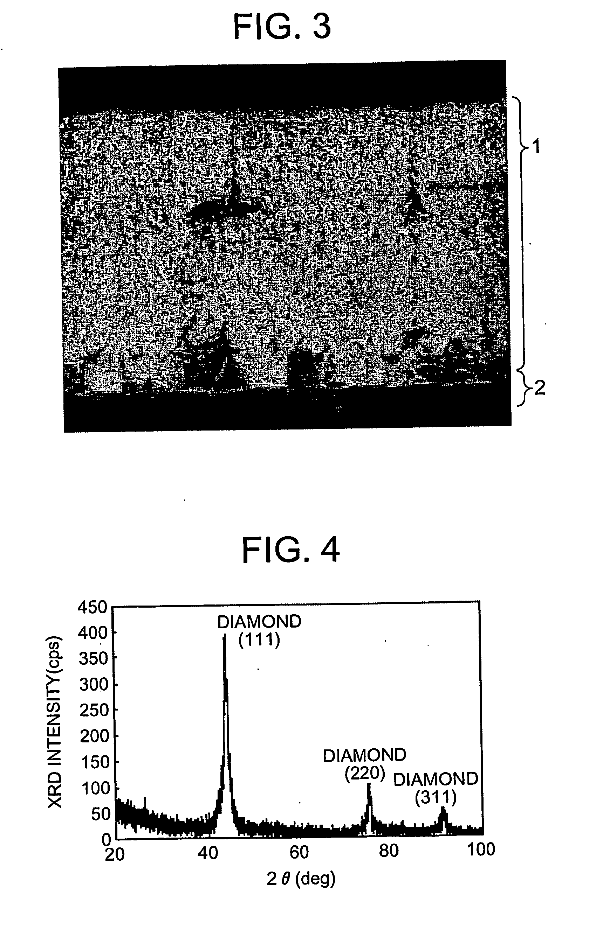

FIG. 3 is a secondary electron image showing a cross section of the electron emission film and a substrate.

FIG. 4 is a diagram showing the X-ray diffraction pattern of the electron emission film.

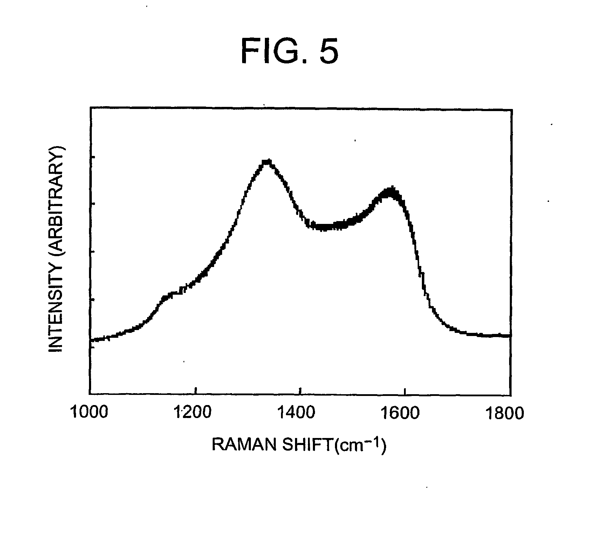

FIG. 5 is a diagram showing Raman spectroscopy spectrum of the electron emission film.

This electron emission film 1 is a diamond thin film made of diamond crystal grains having a grain diameter of 5nm to 10nm, and is formed on a substrate 2 made of a conductive material or a semiconductive material. The substrate 2 and the electron emission film 1 constitute a field emission cold cathode.

Microscopic observation of the surface of the electron emission film 1 by using a scanning electron microscope shows that a plurality of diamond fine grains having a grain diameter of 5nm to 10nm are aggregated in the number of about several tens to several hundreds thereby to form a tissue like a bamboo leaf having a length of about $100\mu m$ or more. The electron emission film 1 seems flat with no bosses and recesses to the naked eye, and therefore has specular reflection thereon as shown in FIG. 2.

As shown in FIG. 3, it is observed that the electron emission film 1 is formed of a simple tissue whose thickness from the surface of the substrate 2 to its film surface is almost uniform, and a plurality of diamond crystal grains with a grain diameter of 5nm to 10nm and black carbon very thinly covering the surface of the diamond crystal grains are present. The X-ray diffraction pattern through the electron emission film 1 has conspicuous peaks of the diamond crystal as shown in FIG. 4. Note that diamond-like carbon shows no so high orientation as diamond, hence does not show such sharp peaks as shown in FIG. 4 by X-ray spectrum.

When the electron emission film is subjected to Raman spectroscopy using laser light having a wavelength of 532nm, peaks are observed at near $1350cm^{-1}$ and near $1580cm^{-1}$ as shown in FIG. 5. The half-value width of the peak at near $1350cm^{-1}$ is $50cm^{-1}$ or more.

It is apparent that the electron emission film 1 is formed not only of diamond crystal grains, because the electron emission film 1 shows a very small resistivity of several $k\Omega \cdot cm$ as compared to the resistivity inherent in diamond, in spite of its possession of the diamond structure.

That is, the presence of the diamond structure in the composition of the electron emission film 1 has been confirmed from the X-ray diffraction pattern, and the presence in the electron emission film 1 of carbon including carbon having a graphite structure containing $sp^2$ bonds and showing conductivity can be confirmed because a broad peak whose half-value width is $50cm^{-1}$ or more has been observed in the Raman spectroscopy spectrum, which means that the electron emission film 1 is a complex material in which such carbon is formed in the clearances between the diamond crystal grains and in the outermost surface of the electron emission film 1.

Next, a thin film forming method for forming the electron emission film 1 on the substrate 2 will be explained.

A silicon monocrystal wafer which has, for example, a crystal surface (100) is cut into squares having a side length of 30mm, and the surface of the square is scratched to form recesses (grooves) whose average roughness is $3\mu m$ or less, by using diamond fine grains having a grain diameter of 1 to $5\mu m$, which are to be used as nuclei for growing the electron emission film 1. The scratched wafer will be the substrate 2. Degreasing and ultrasonic cleaning are simultaneously applied to the substrate 2 embossed and recessed by scratching.

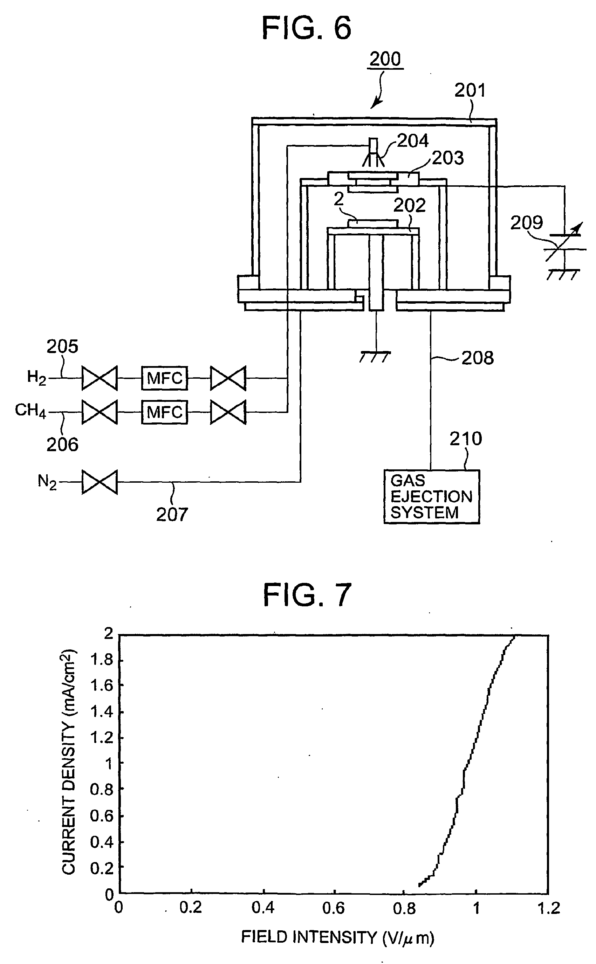

The substrate 2 is then placed on a susceptor 202 in a DC plasma CVD system 200 having the configuration shown in FIG. 6.

The DC plasma CVD system 200 is a general-purpose processing system, and comprises a process chamber 201, a susceptor 202, an upper electrode 203, a process gas showerhead 204, gas supply pipes 205 and 206, a purge gas supply pipe 207, a gas ejection pipe 208, and a direct-current (DC) power source 209.

The susceptor 202 serves also as a lower electrode and has a process target placed thereon. The upper electrode 203 has a lower voltage applied thereto than that applied to the lower electrode 202.

The gas supply pipe 205 comprises a mass flow controller (MFC) and valves, and introduces hydrogen gas to the showerhead 204. The gas supply pipe 206 comprises an MFC and valves, and introduces gas comprising a compound containing a carbon in its composition that includes at least one of (1) a hydrocarbon compound such as methane, ethane, acetylene, etc., (2) an oxygen-containing hydrocarbon compound such as methanol, ethanol, etc., (3) an aromatic hydrocarbon such as benzol, toluene, etc., (4) carbon monoxide, and (5) carbon dioxide, to the showerhead 204.

The purge gas supply pipe 207 introduces nitrogen gas as purge gas to the process chamber 201, after the electron emission film 1 is formed. The gas ejection pipe 208 is connected to a gas ejection system 210 for ejecting gas from the process chamber 201. The DC power source 109 applies a DC current between the susceptor 202 and the upper electrode 203.

When the substrate 2 is placed on the susceptor 202, the interior of the process chamber 201 is depressurized, and then hydrogen gas and gas (material gas) comprising a compound containing a carbon such as methane are introduced from gas supply sources to the showerhead 204 through the gas supply pipes 205 and 206. The material gas is supplied into the process chamber 201 to form the electron emission film 1 on the surface of the substrate.

The gas comprising a compound containing carbon in its composition is preferably 3vol% to 30vol% of the whole material gas. For example, the mass flow of methane is set at 50 SCCM while that of hydrogen is set at 500 SCCM, and the whole pressure is set at 0.05 to 0.15 atm, preferably at 0.07 to 0.1 atm. The substrate 2 is rotated at 10 rpm, and the state of plasma and the temperature of the substrate 2 are controlled by adjusting the voltage output from the DC power source 209 to between the susceptor (lower electrode) 202 and the upper electrode 203 such that the temperature variation on the substrate 2 is restricted within 5°C.

When the electron emission film 1 is being formed, the portion of the substrate 2 where the electron emission film 1 is to be formed is maintained at a temperature of 840°C to 890°C for 120 minutes. Particularly, an electron emission film 1 of a stable characteristic could be obtained when the temperature of the portion of the substrate 2 where the electron emission film 1 is to be formed was 860°C to 870°C. These temperatures were measured by a spectroscopic method. It was confirmed that the electron emission film 1 including diamond fine grains can be grown even if the gas comprising a compound containing carbon in its composition is less than 3vol% of the whole material gas, but the electron emission characteristic of such a film is extremely poor.

At the end of the film formation, the voltage application between the susceptor 202 and the upper electrode 203 is stopped, and then the supply of the process gas is stopped. Nitrogen gas is supplied into the process chamber 201 through the purge gas supply pipe 207 to restore the atmospheric pressure, and the substrate 2 is taken out.

Through the above-described steps, the electron emission film 1 is formed.

FIG. 7 is a diagram showing the electron emission characteristic of a field emission electrode constituted by the electron emission film 1 and the substrate 2.

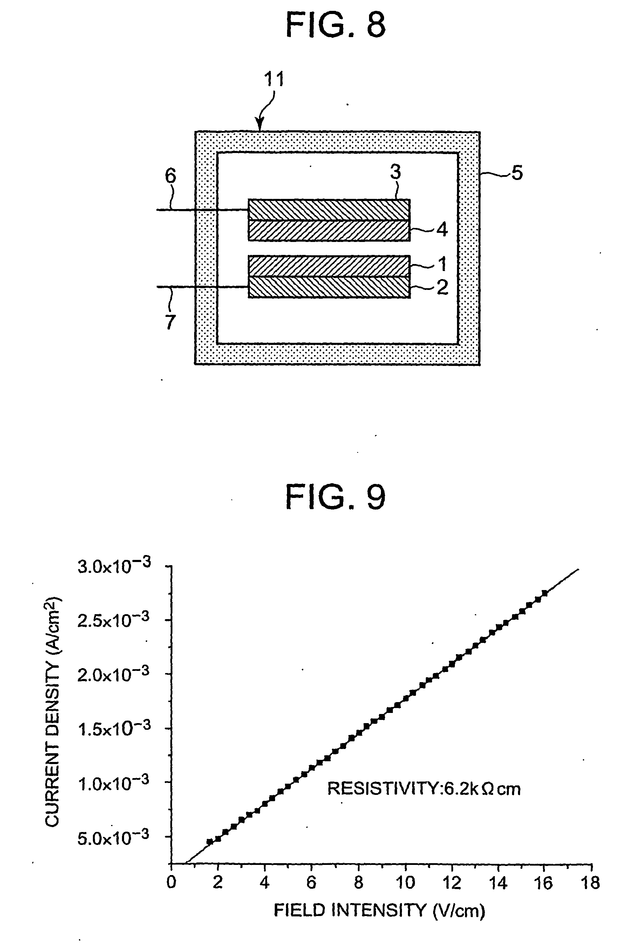

FIG. 8 is a schematic cross sectional view of an electronic device constituted by a field emission fluorescent tube 11 comprising a field emission electrode including the electron emission film 1 having such a diamond structure.

FIG. 9 is a diagram showing a current-voltage characteristic of the electron emission film 1 formed through the above-described steps.

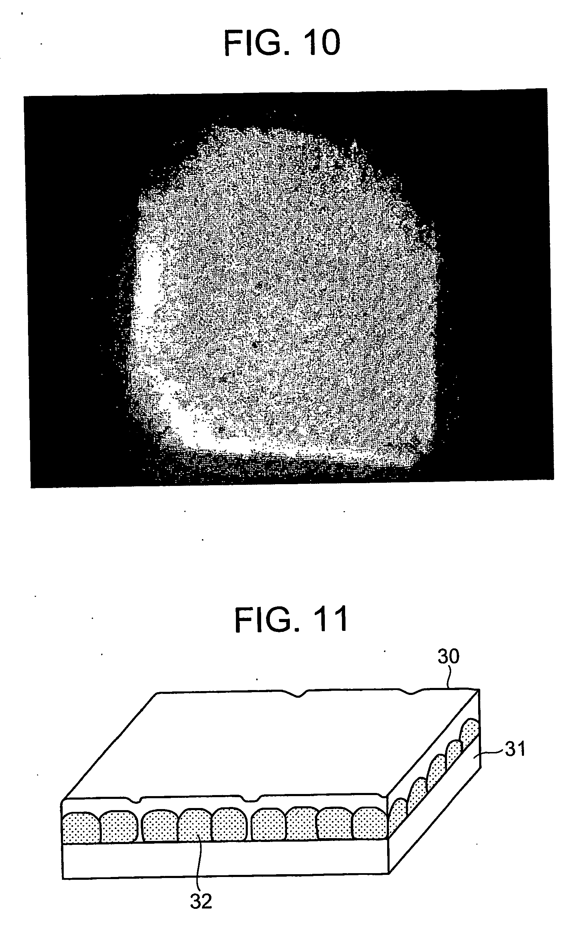

FIG. 10 is a diagram showing a state of light emission caused by electron emission from the electron emission film 1.

Though it is apparent from XRD measurement that the electron emission film 1 has a diamond structure, it shows, as shown in FIG. 9, a resistivity of about 6kΩ·cm, which is much smaller than the resistivity of smaller than $10^{15}\Omega\cdot$cm inherent in diamond.

The resistivity of a favorable electron emission film 1 was 1kΩ·cm to 18kΩ·cm. The electron emission film 1 allows presence of carbon including carbon having $sp^2$ bonds of the above-described graphite structure between the diamond fine grains, and of which carbon, carbon having the graphite structure showing conductivity contributes to lowering the resistivity of the whole electron emission film 1.

To evaluate the field emission electrode (cold cathode) formed through the above-described steps, the field intensity in case of the current density of cold electrons emitted from the electron emission film 1 being 1mA/cm$^2$ is 0.95V/$\mu$m, as shown in FIG. 7. Since the electron emission film 1 can show conductivity of 1kΩ·cm to 18kΩ·cm, it can have an excellent electron emission characteristic.

The field emission fluorescent tube 11 comprising the field emission electrode including the electron emission film 1 comprises, as shown in FIG. 8, a cathode electrode as field emission electrode including the electron emission film 1 formed on the substrate 2, an anode electrode 3 as opposite electrode formed of a fluorescent film 4 on the surface facing the electron emission film 1, and a glass tube 5 which seals the cathode electrode and the anode electrode 3 in a vacuum atmosphere. A wire 7 made of nickel is connected to the electron emission film 1 or the substrate 2, and a wire 6 made of nickel is connected to the anode electrode 3.

The fluorescent plate is observed as causing, due to electron emission, light emission with a high luminance at a low voltage, as shown in FIG. 10. Since being able to be driven at a low voltage like this, the electron emission film 1 can elongate its life of electron emission. The field emission fluorescent tube 11 is one called VFD (Vacuum Fluorescent Display) which causes light emission by making cold electrons collide against the fluorescent film 4 by applying a predetermined voltage between the anode electrode 3 and the cathode electrode, and can also be used in an FED (Field Emission Display) having a flat panel structure which includes a plurality of such light emission regions as pixels.

Since such an electron emission film 1 has the nanodiamond aggregates in its emitter surface, it can produce a high current density at a low field intensity and can have a high durability because it has no hysteresis in its electron emission characteristic.

[Embodiment 2]

FIG. 11 is a diagram schematically showing an electron emission film 30 according to the embodiment 2 of the present invention.

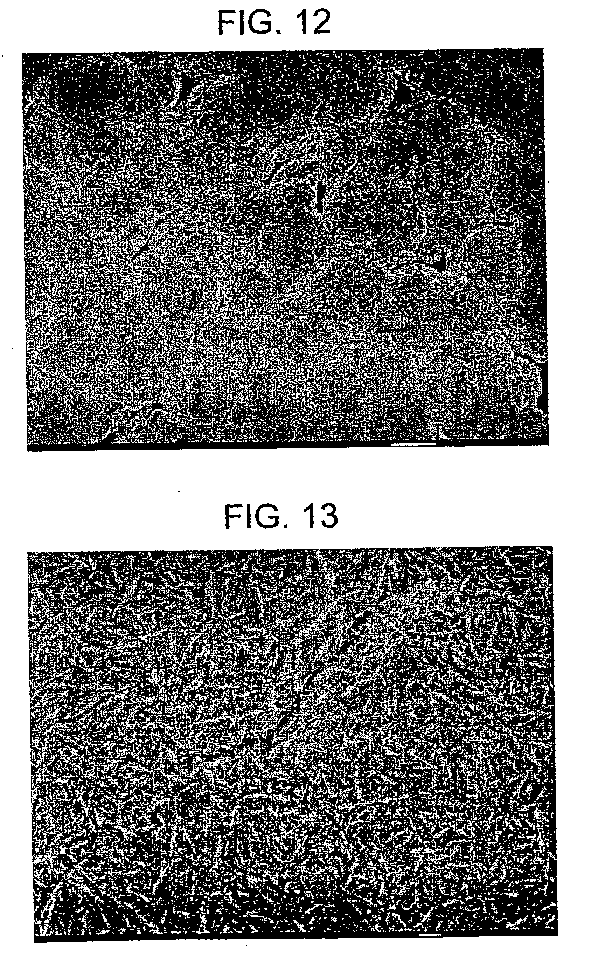

FIG. 12 is an image obtained by scanning the surface of the electron emission film 30 of FIG. 11 including diamond fine grains, by using a scanning electron microscope.

FIG. 13 is an expanded image of the electron emission film 30 of FIG. 12.

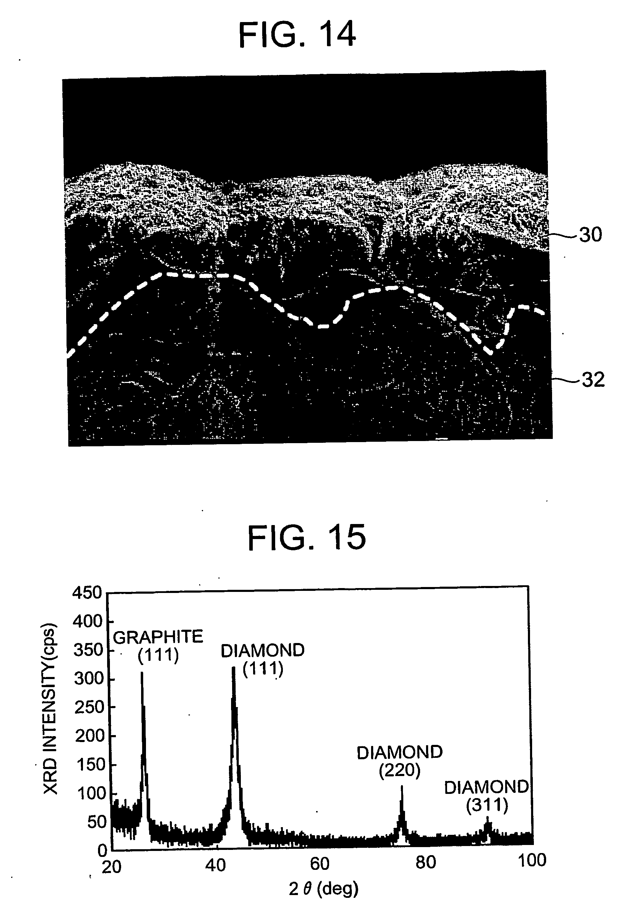

FIG. 14 is a secondary electron image showing a cross section of the electron emission film 30 of FIG. 12 and of a carbon-nanowall 32.

The electron emission film 30 according to the embodiment 2 includes a diamond structure in its composition likewise the electron emission film 1 according to the embodiment 1, but is not formed directly on a substrate as in the embodiment 1 but is formed on the carbon-nanowall 32 which is formed on a substrate 31.

The carbon-nanowall 32 is formed of a plurality of carbon thin flakes of a petal (fan) shape having a curved surface which are uprightly bonded to the others in random directions. The carbon-nanowall 32 has a thickness of 0.1nm to 10$\mu$m. Each carbon thin flake is formed of several to several tens of graphene sheets having a lattice interval of 0.34nm.

The electron emission film 30 is formed of a plurality of diamond fine grains having grain diameter of 5nm to 10nm, and has an aggregate of several tens to several hundreds of diamond fine grains in its surface as in the embodiment 1, which form a bamboo-leaf-like tissue as shown in FIG. 13. A plurality of such bamboo-leaf-like tissues are gathered to form dense colonies whose surface is generally circular. Such an electron emission film 30 covers the carbon-nanowall 32, as shown in FIG. 11. The colony diameter of the electron emission film 30 is about 1$\mu$m to 5$\mu$m, and it is preferable that the colonies are grown to such an extent enough to completely cpver the carbon-nanowall 32 with no uncovered portion left.

The method of forming such an electron emission film 30 will be explained.

First, for example, a nickel plate is cut into substrates 31 and then sufficiently degreased and cleaned by ultrasonic using ethanol or acetone.

The substrate 31 is placed on the susceptor 202 in the DC plasma CVD system 200 having the configuration of FIG. 6.

When the substrate 31 is placed on the susceptor 202, the process chamber 201 is depressurized, hydrogen gas and gas comprising a compound (carbon-containing compound) containing carbon such as methane in its composition are introduced to the showerhead 204 from the gas supply sources through the gas supply pipes 205 and 206, and the material gas is supplied into the process chamber 201.

The gas comprising a compound containing carbon in its composition is preferably 3vol% to 30vol% of the whole material gas. For example, the mass flow of methane is set at 50 SCCM while that of hydrogen is set at 500 SCCM, and the whole pressure is set at 0.05 to 0.15 atm, preferably at 0.07 to 0.1 atm. The substrate 31 is rotated at 10 rpm, and the state of plasma and the temperature of the substrate 31 are controlled by adjusting the voltage output from the DC power source 209 to between the susceptor (lower electrode) 202 and the upper electrode 203 such that the temperature variation on the substrate 31 is restricted within 5°C.

While the carbon-nonowall 32 is being formed, the portion of the substrate 31 where the carbon-nanowall 32 is to be formed is maintained at 900°C to 1100°C. These temperatures were measured by a spectroscopic method. Continuously with the gas atmosphere unchanged, the temperature of the portion where a plurality of diamond fine grains are to be formed is set at 10°C or more lower than that of the substrate 31 when the carbon-nanowall 32 was being formed, thus to be 890°C to 950°C, more preferably to be 920°C to 940°C, thereby forming the electron emission film 30, which is formed of a plurality of densely gathered diamond fine grains having been grown from the nucleus of carbon-nanowall 32. The period of time in which the temperature of the electron emission film 30 is maintained is preferably about 30 minutes to 120 minutes. It was found that the electron emission film 30 was formed at temperatures of a higher range than that of the embodiment 1. This shows that the base film affects the temperature at which the electron emission film 30 is formed, and it was further found that changes in the plasma irradiation condition causes changes in the appropriate temperature range. However, by decreasing the temperature to be lower than that of the substrate 31 at the time the carbon-nanowall 32 was being formed thereon, the electron emission film 30 was formed relatively quickly. Especially, by an abrupt temperature decrease of 10°C or more, the film being formed quickly transformed into the electron emission film 30. The electron emission film 30 covers the entire surface of the carbon-nanowall 32, and its topmost surface is flatter than the surface of the carbon-nanowall 32 as shown in FIG. 14. It was confirmed that the electron emission film 30 including diamond fine grains can be grown even if the gas comprising a compound containing carbon in its composition is less than 3vol% of the whole material gas, but the electron emission characteristic of such a film is extremely poor.

A radio-spectrometer is employed as the temperature measuring device used for such film formation. Therefore, if such an electron emission film 30 was directly formed on the substrate, radiation from the electron emission film 30 would become unstable so that a bad influence would be given on the temperature measurement. However, since the emissivity of the carbon-nanowall 32 is 1, using the carbon-nanowall 32 as the base film and setting 0.7 as the emissivity of the upper film in accordance with diamond as the main component of the upper film would allow the temperature to be measured stably.

At the end of the film formation, the voltage application between the susceptor 202 and the upper electrode 203 is stopped, and then the supply of the process gas is stopped. Nitrogen gas is supplied into the process chamber 201 through the purge gas supply pipe 207 to restore the atmospheric pressure, and then the substrate 31 is taken out.

The electron emission film 30 shown in FIG. 11 is formed through the above-described steps.

By appropriately selecting the conditions such as the mixture ratio of the material gas, the gas pressure, the bias voltage of the substrate 31, etc., and by maintaining the temperature of the portion where the carbon-nanowall 32 is to be formed to be higher than the film forming temperature set for the electron emission film 30 formed of diamond fine grains and to be in the range of 90°C to 1100°C for 30 minutes, the layer of carbon-nanowall 32 is formed on the substrate 31. Subsequently, by decreasing the temperature of the portion where the electron emission film 30 formed of diamond fine grains is to formed by 10°C from the temperature at which the carbon-nanowall 32 was formed, the electron emission film 30 is formed on the carbon-nanowall 32. The carbon-nanowall 32 has an excellent electron emission characteristic, but has bosses and recesses of several microns, which makes the carbon-nanowall 32 difficult to form a uniform emission site thereon. A uniform surface shape can be obtained by forming the electron emission film 30 formed of diamond fine grains on the carbon-nanowall 32.

The electron emission film 30 formed by the above-described steps will now be evaluated.

FIG. 15 is a diagram showing the X-ray diffraction pattern of the electron emission film 30.

To check the X-ray diffraction pattern of the electron emission film 30, conspicuous peaks of the diamond crystal and also a peak of the graphite were observed. Taken together with FIG. 4, it is obvious that this peak of the graphite structure is attributed to the carbon-nanowall 32. Further, the principal surface of the electron emission film 30 is not only of diamond fine grains, but also a very thin film covering the diamond fine grains was found thereon. It was confirmed that this film is of carbon including graphite carbon showing conductivity, taking into consideration the fact that the resistivity of the excellent electron emission film 30 was several $k\Omega \cdot cm$, and the composition of the material gas used in the above-described manufacturing steps. The electron emission film 30 allows presence of carbon including carbon having $sp^2$ bonds of the above-described graphite structure in its topmost surface and between the diamond fine grains, and of which carbon, carbon having the graphite structure showing conductivity contributes to lowering the resistivity of the whole electron emission film 30.

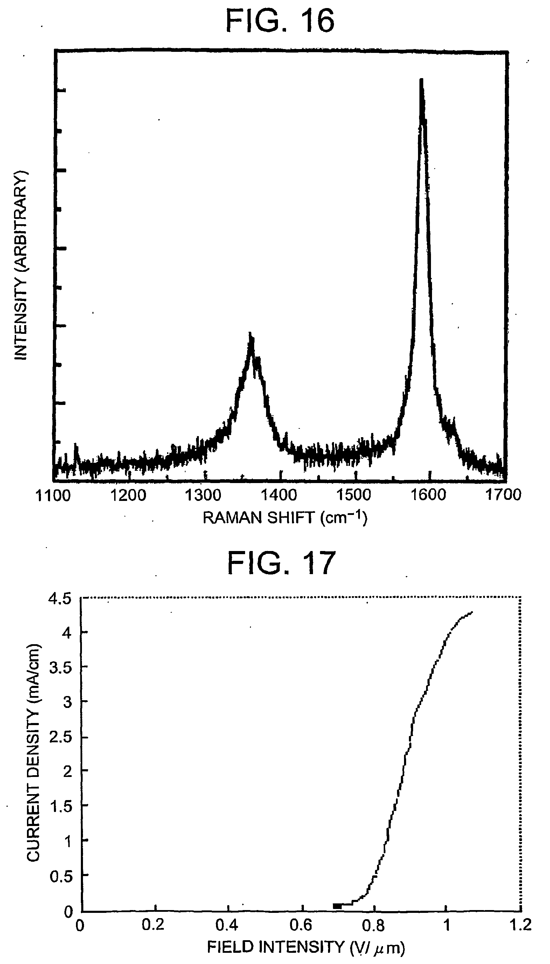

FIG. 16 shows the spectrum of the carbon-nanowall 32 obtained by Raman spectroscopy before the electron emission film 30 is formed thereon.

The carbon thin flakes of the carbon-nanowall 32 show a sharp ratio of intensity between a G-band peak at near $1580 cm^{-1}$ having a half-value width of less than $50 cm^{-1}$, which is due to the vibration of carbon atoms in the hexagon lattices formed by carbon-carbon bonds ($sp^2$ bonds) of the graphite structure, and a D-band peak at near $1350 cm^{-1}$ having a half-value width of less than $50 cm^{-1}$, which is due to $sp^3$ bonds, and show almost no other peaks. It is therefore obvious that a carbon-nanowall 32 formed of a dense and highly-pure graphite structure has been grown.

When the electron emission film 30 is subjected to Raman spectroscopy using laser light having a wavelength of 532nm, peaks are observed at near $1350 cm^{-1}$ and near $1580 cm^{-1}$, likewise the electron emission film 1 of the embodiment 1. The half-value width of the peak at near $1350 cm^{-1}$ is $50 cm^{-1}$ or more. That is, the presence in the composition of the electron emission film 30 of crystalline diamond is confirmed from the X-ray diffraction pattern and a broad peak whose half-value width is $50 cm^{-1}$ or more has been observed in the Raman spectroscopy spectrum, which suggests the presence of carbon having $sp^2$ bonds which are the main factor for the possession by the electron emission film 30 of conductivity and the presence of carbon including amorphous carbon having a resistivity of mega $\Omega \cdot cm$ level. The electron emission film 30 is a complex material of these kinds of carbon.

Likewise the embodiment 1, though it is apparent from XRD measurement that the electron emission film 30 has a diamond structure, it shows a resistivity of $20k\Omega \cdot cm$ or less, which is much smaller than the resistivity of smaller than $10^{16}\Omega \cdot cm$ inherent in diamond.

The resistivity of a favorable electron emission film 30 was $1k\Omega \cdot cm$ to $18k\Omega \cdot cm$. It can therefore be recognized that in the electron emission film 30, the substance formed in the uppermost surface and in the clearances between the diamond fine grains includes the above-described carbon having $sp^2$ bonds, and this $sp^2$ bond carbon has the graphite structure and contributes to lowering the resistivity of the whole electron emission film 30.

FIG. 17 is a diagram showing the electron emission characteristic of a field emission cold cathode constituted by the electron emission film 30, the substrate 31, and the carbon-nanowall 32.

The field intensity in case of the current density of cold electrons emitted from the field emission cold cathode constituted by the electron emission film 30, the substrate 31, and the carbon-nanowall 32 being $1mA/cm^2$ is, as shown in FIG. 17, $0.84V/\mu m$. This electron emission characteristic is more favorable than that of the embodiment 1.

The presence of the carbon-nanowall 32 having high plasticity between the substrate 31 and the electron emission film 30 makes it easier to grow the electron emission film 30 including diamond fine grains and graphite carbon, which then makes it possible to ease the condition, as a criterion for selecting the substrate 31, that the substrate 31 has to be made of a material on which a film of diamond fine grains can be formed, or to ease the stress caused by the difference in thermal expansion coefficient, i.e., a thermal shock caused during the cooling process after the film formation by heating, which would produce a gap between the substrate 31 and the diamond fine grains to thereby cause the electron emission film to be separated or produce cracks between the plurality of aggregates of diamond fine grains.

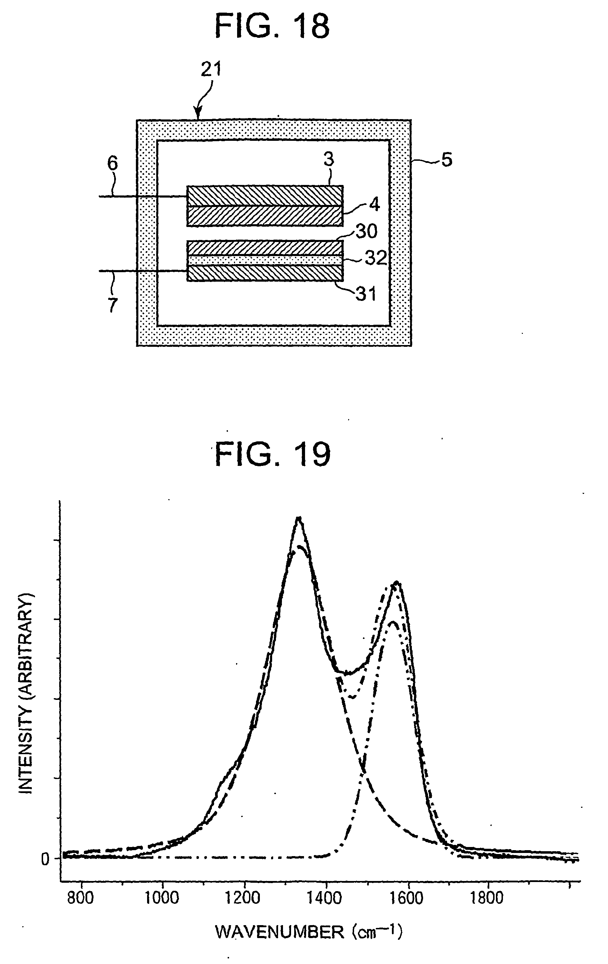

FIG. 18 is a schematic cross sectional view of an electronic device constituted by a field emission fluorescent tube 21 comprising a field emission electrode including the electron emission film 30.

As shown in FIG. 18, the field emission florescent tube 21 comprising the field emission electrode including the electron emission film 30 comprises a cathode electrode which is a field emission electrode including the electron emission film 30 that covers the carbon-nanowall 32 formed on the substrate 31, an anode electrode 3 as an opposite electrode formed of a fluorescent film 4 on a surface facing the electron emission film 30, and a glass tube 5 that seals the cathode electrode and the anode electrode 3 in a vacuum atmosphere. A wire 7 made of nickel is connected to the electron emission film 30 or to the substrate 31, and a wire 6 made of nickel is connected to the anode electrode 3.

The field emission fluorescent tube 21 is a fluorescent tube called VFD (Vacuum Fluorescent Display) that causes light emission by causing cold electrodes to collide against the fluorescent film 4 by applying a predetermined voltage between the anode electrode 3 and the cathode electrode. It is also possible to use the field emission fluorescent tube 21 in an FED (Field Emission Display) having a flat panel structure which includes a plurality of such light emission regions as pixels.

Since such an electron emission film 30 has the nanodiamond aggregates in its emitter surface, it can produce a high current density at a low field intensity and can have a high durability because it has no hysteresis in its electron emission characteristic.

The present invention is not limited to the above-described embodiments 1 and 2, but can be modified in various manners.

For example, the substrate may be made of at least one of rare earth, copper, silver, gold, platinum, and aluminum, other than silicon monocrystal wafer and nickel.

The mixture ratio of the hydrogen gas and the carbon-containing compound as the material gas may be arbitrarily selectively changed.

In FIG. 19, the solid line indicates the Raman spectrum obtained from the carbon film including the plurality of diamond fine grain aggregates that serves as the electron emission film 1 of the embodiment 1, and obtained from the carbon film including the plurality of diamond fine grain aggregates that serves as the electron emission film 30 of the embodiment 2. According to the embodiment 2, though the carbon-nanowall 32 is provided under the electron emission film 30, the same behavior as that indicated by the Raman spectrum of the embodiment 1 is shown, as long as the electron emission film 30 is formed to an extent sufficient to entirely cover the carbon-nanowall 32.

Now, the portion ranging from $750cm^{-1}$ to $2000cm^{-1}$ is extracted from the Raman spectrum, and with the line that connects both ends of the extracted portion seen as a baseline, the values existing on the baseline are eliminated from the spectrum. Then, by the nonlinear least-squares method, the spectrum is fit to a pseudo-Voigt function indicated by the following equation (1) where the initial values of the position are $1333cm^{-1}$ and $1580cm^{-1}$.

[Equation 1]

$$F(x) = a * [g * \exp(-(\sqrt{2} * (x-p)/w^2)) + (1-g) * 1/(1 + (x-p)/w^2)]$$

where a = amplitude, g = Gauss/Lorenz ratio, p = position, and w = line width.

According to the nonlinear least-squares method, not only the peak intensity but also the peak position and the line width are allowed some tolerance, in fitting the spectrum to the pseudo-Voigt function. Hence, as long as the initial values to be set first are appropriate ones, an optimum parameter that would restrict the error (x2) between the actually-observed spectrum and the set function to the minimum can be obtained. Therefore, it is unnecessary to minutely and precisely set the peak wavelength. If spectrum fitting by the least-squares method under the following initial condition is available, a parameter that can have the optimum area ratio will be obtained.

The applied initial value conditions are, a: the local maximum value of the actually-observed peak existing between $1250cm^{-1}$ and $1400cm^{-1}$, g: 0.6, p: $1333cm^{-1}$ and w: $200cm^{-1}$ for the portion of the electron emission film where $sp^3$ bonds are formed, whereas a: the local maximum value of the actually-observed peak existing, between $1530cm^{-1}$ and $1630cm^{-1}$, g: 1, p: $1580cm^{-1}$, and w: $100cm^{-1}$ for the portion of the electron emission film where $sp^2$ bonds are formed. Though the nonlinear least-squares method is not algorithm-dependent, the Marquardt method is more preferable.

In this manner, the area ratio between the D band whose peak is at near $1333cm^{-1}$ and the G band whose peak is at near 1580cm$^{-1}$, i.e., a ratio (D-band intensity)/(G-band intensity) is obtained. In FIG. 19, the dashed line indicates the combined component of the D-band intensity and G-band intensity, the broken line indicates the D-band intensity component extracted from the combined component, and the double-dashed line indicates the G-band intensity component extracted. The ratio (D-band intensity)/(G-band intensity) can be paraphrased as a ratio (the number of sp$^3$ bonds in the film)/(the number of sp$^2$ bonds in the film), i.e., a ratio (carbon having sp$^3$ bonds)/(carbon having sp$^2$ bonds).

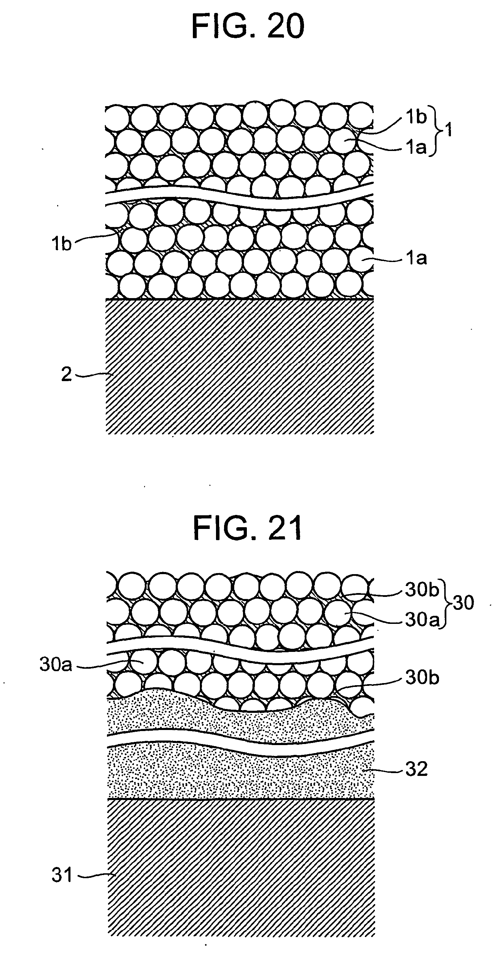

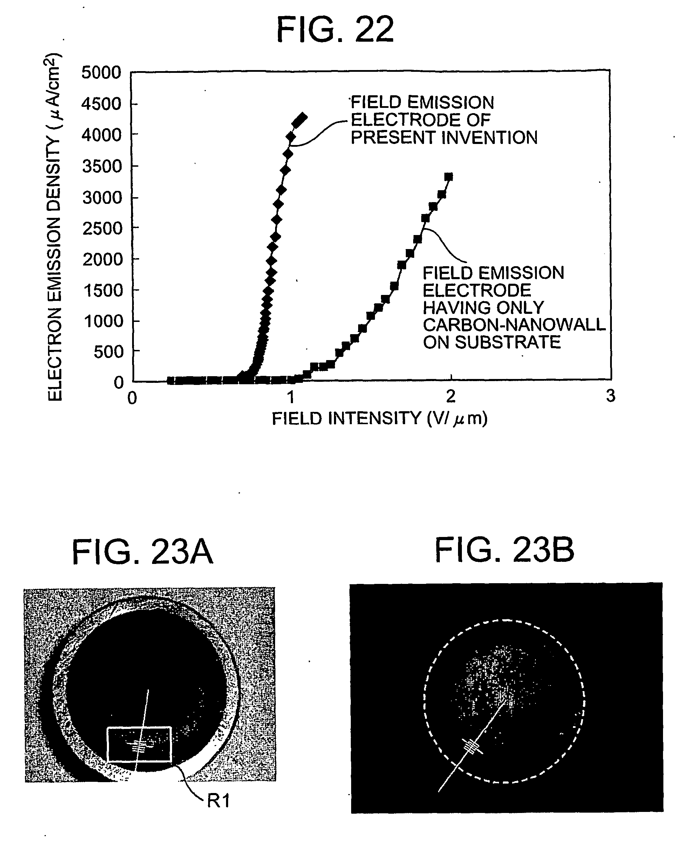

Accordingly, although the electron emission film 1 of the embodiment 1 and the electron emission film 30 of the embodiment 2 are seemingly a single-layer film as a whole, they have, when microscopically seen, a complex structure including the aggregates of diamond fine grains formed of carbon of sp$^3$ bonds indicated as D band and having a grain diameter of about 5nm to 10nm, and carbon of sp$^2$ bonds indicated as G band and existing between the diamond fine grains. For example, FIG. 20 illustrates the electron emission film 1 shown in FIG. 3 more understandably, where the carbon 1b of sp$^2$ bonds indicated as G band exists in the clearances in the aggregates of diamond fine grains 1a, 1a, .... Likewise, FIG. 21 illustrates the electron emission film 3 0 shown in FIG. 11 more understandably, where the carbon 30b of sp$^2$ bonds indicated as G band exists in the clearances in the aggregates of diamond fine grains 30a, 30a, .... Assuming that the thickness of the electron emission film is 3$\mu$m, several hundreds of diamond fine grains are continuously stacked in the thickness-wise direction. These diamond fine grains are insulative, but the carbon of sp$^2$ bonds in the clearances has conductivity, and therefore the film as a whole has conductivity. It was confirmed that the field emission electrode including the electron emission film 1 or the electron emission film 30 causes field emission at a lower voltage and has a more excellent electron emission characteristic than a field emission electrode of a comparative example in which a carbon-nanowall having the same structure as the carbon-nanowall 32 is formed on the substrate, as shown in FIG. 22.

Since each diamond fine grain in such an electron emission film has a negative electron affinity and has a very small grain diameter of 10nm or less, electrons can be emitted by the tunnel effect. Furthermore, not only the carbon of sp$^2$ bonds that exists in the clearances between the diamond fine grains at a predetermined abundance ratio imparts conductivity to the film as a whole to thereby facilitate field emission, but also it is so arranged that the diamond fine grains be not stacked so continuously that the tunnel effect cannot be obtained. That is, if about a hundred diamond fine grains having a grain diameter of 10nm are stacked in a predetermined direction with substantially no clearances therebetween, the thickness of the diamond will seemingly be 1000nm, which will substantially inhibit the occurrence of the tunnel effect even if a strong field is applied. However, since the presence of the carbon of sp$^2$ bonds having conductivity separates the respective diamond fine grains, each diamond fine grain can exhibit the tunnel effect. This tunnel effect allows an electron emitted from the substrate upon a voltage application to be once injected into the nearest diamond fine grain, field-emitted from this diamond fine grain, and again injected into a diamond fine grain adjacent to that diamond fine grain in the field direction, subsequently repeatedly causing such electron emission in the field direction of the electron emission film and finally causing the electron to be emitted from the outermost surface of the electron emission film.

FIG. 23A is an image of the formed electron emission film, and FIG. 23B is an image showing light excited by a fluorescent body due to field emission by this electron emission film in a case where the fluorescent body and a transparent conductor are disposed above the electron emission film.

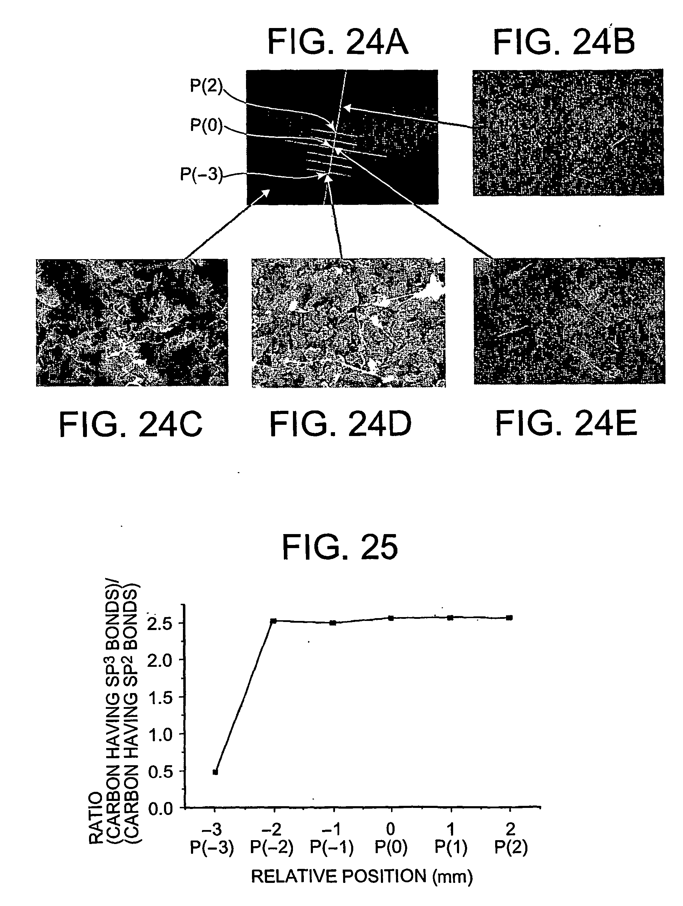

FIG. 24A is an expanded image of a region R1 of FIG. 23A.

FIG. 24B is an SEM image of a position that is indicated by the arrow of FIG. 24A, and located more inside the positions indicated in the later-described FIG. 24C, FIG. 24D, and FIG. 24E in the electron emission film, and that is a position of the film where diamond fine grains are densely aggregated upon the substrate and where the most favorable electron emission characteristic is exhibited. At this position, the ratio (carbon having sp$^3$ bonds)/(carbon having sp$^2$ bonds) is 2.55, and the grain diameter of the diamond fine grains is 5nm to 10nm.

FIG. 24C is an SEM image of a position that is indicated by the arrow of FIG. 24A, and located more outside the positions indicated in FIG. 24A and in the later-described FIG. 24D and FIG. 24E in the electron emission film, and that is a position where substantially only the carbon-nanowall is formed upon the substrate. At this position, the electron emission characteristic is the worst, which is almost the same as that of the comparative example shown in FIG. 22. At this position, the ratio (carbon having sp$^3$ bonds)/(carbon having sp$^2$ bonds) is 0.1.

FIG. 24D is an SEM image of a position that is indicated by the arrow of FIG. 24A, and located more outside the position shown in FIG. 24B and more inside the position shown in FIG. 24C, and that is a position where multiple diamond fine grains stacked over the petal-shaped graphene sheets of carbon-nanowall formed upon the substrate are aggregated in a spherical shape. One sphere is formed of multiple diamond fine grains. This sphere is obtained when diamond fine grains are grown over the end portion of the grown petal-shaped graphene sheets. The electron emission characteristic at this position is better than that of the carbon-nanowall of FIG. 24C, but is worse than the film position of FIG. 24B where the diamond fine grains are densely aggregated. At this position, the ratio (carbon having sp$^3$ bonds) /(carbon having sp$^2$ bonds) is 0.5, and the grain diameter of the diamond fine grains is 5nm to 10nm.

FIG. 24E is an SEM image of a position that is indicated by the arrow of FIG. 24A, and located more outside the position shown in FIG. 24B and more inside the position shown in FIG. 24D, and that is a position where the diamond fine grains are more further grown into crystalline phase than at the position shown in FIG. 24D and the spheres are bonded together to make the surface of the film relatively smooth, however with some clearances sparsely left between the spheres. The electron emission characteristic at this position is better than that of the carbon-nanowall of FIG. 24D and is slightly worse than that of the film position of FIG. 24B where the diamond fine grains are densely aggregated, but is sufficient as the electron emission film. At this position, the ratio (carbon having $sp^3$ bonds)/(carbon having $sp^2$ bonds) is 2.50, and the grain diameter of the diamond fine grains is 5nm to 10nm.

FIG. 25 shows the ratios (carbon having $sp^3$ bonds)/(carbon having $sp^2$ bonds) at the respective positions of the electron emission film, where the position P(0) shown in FIG. 24A is set as a relative position "0", and positions P(1) and p(2) are reached by moving from the position P(0) towards the position shown in FIG. 24B by 1mm and 2mm respectively, and positions P(-1), P(-2), and P(-3) are reached by moving from the position P(0) towards the position shown in FIG. 24D by 1mm, 2mm, and 3mm respectively.

Sufficient light emission was achieved at a low voltage where the ratio (carbon having $sp^3$ bonds)/(carbon having $sp^2$ bonds) was around 2.5, whereas a relatively high voltage was required to achieve light emission at the ratio (carbon having $sp^3$ bonds)/(carbon having $sp^2$ bonds) of 0.5. The positions showing a particularly excellent electron emission characteristic had the ratio (carbon having $sp^3$ bonds)/(carbon having $sp^2$ bonds) of 2.50 or more.

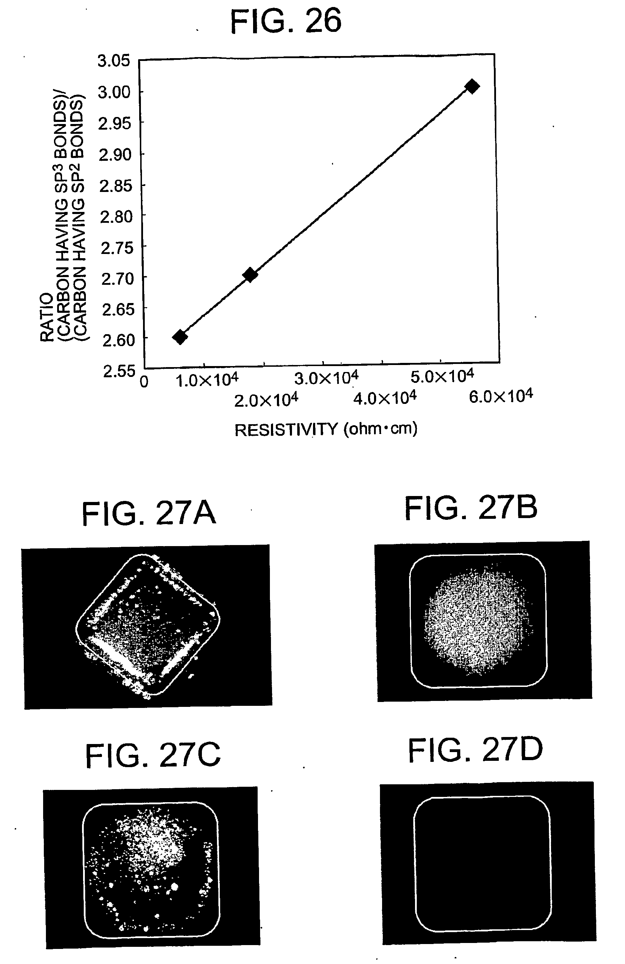

FIG. 26 is a graph showing the resistivity of films which were so formed as to have a ratio (carbon having $sp^3$ bonds)/(carbon having $sp^2$ bonds) that is shifted to a higher level.

An electron emission film having the ratio (carbon having $sp^3$ bonds)/(carbon having $sp^2$ bonds) of 2.6 has the resistivity of $0.6 \times 10^4 (\Omega \cdot cm)$, and its electron emission characteristic is better than that of an electron emission film having the ratio (carbon having $sp^3$ bonds)/(carbon having $sp^2$ bonds) of 2.50 to 2.55.

An electron emission film having the ratio (carbon having $sp^3$ bonds)/(carbon having $sp^2$ bonds) of 2.7 has the resistivity of $1.8 \times 10^4 (\Omega \cdot cm)$, and its electron emission characteristic is worse than that of the electron emission film having the ratio (carbon having $sp^3$ bonds)/(carbon having $sp^2$ bonds) of 2.6 but is equivalent to a film having the ratio (carbon having $sp^3$ bonds)/(carbon having $sp^2$ bonds) of 2.55, which is sufficient as the electron emission film of a field emission electrode.

An electron emission film having the ratio (carbon having $sp^3$ bonds)/(carbon having $sp^2$ bonds) of 3.0 has the resistivity of $5.6 \times 10^4 (\Omega \cdot cm)$, and its electron emission characteristic is worse than that of an electron emission film having the ratio (carbon having $sp^3$ bonds)/(carbon having $sp^2$ bonds) of 2.50. This is due to that the conductivity is lowered as the abundance ratio of the carbon having $sp^2$ bonds is lowered, in addition to that the less presence of the carbon having $sp^2$ bonds in the clearances between the diamond fine grains makes the thickness of the diamond seemingly larger and reduces the ratio of positions from where tunnel electrons can be efficiently emitted.

FIGS. 27 are images showing the states of light emission by a fluorescent body formed on an anode electrode, in a case where the anode electrode is disposed at a position apart by 4.5mm from a cathode electrode including the electron emission film of the present invention, and a pulse voltage of 6kV (1kHz, duty ratio of 1%) is applied between the anode electrode and the cathode electrode.

FIG. 27A shows the state of light emission in a case where the resistivity of the electron emission film is 1kΩ·cm. FIG. 27B shows the state of light emission in a case where the resistivity of the electron emission film is 6kΩ·cm. FIG. 27C shows the state of light emission in a case where the resistivity of the electron emission film is 18kΩ·cm. FIG. 27D shows the state of light emission in a case where the resistivity of the electron emission film is 56kΩ·cm. It was confirmed that the electron emission film of FIG. 27D causes light emission by applying a stronger field. The ratio (carbon having sp3. bonds)/(carbon having $sp^2$ bonds) of the electron emission film of FIG. 27A is 2.5.

After such electron emission films were repeatedly manufactured, it was found that an electron emission film from which a favorable electron emission characteristic was obtained had the ratio (carbon having $sp^3$ bonds)/(carbon having $sp^2$ bonds) of 2.5 to 2.7. Particularly, an electron emission film from which a more favorable electron emission characteristic which would allow the threshold field intensity to be 1.5V/μm or lower was obtained had the ratio (carbon having $sp^3$ bonds)/(carbon having $sp^2$ bonds) of 2.55 to 2.65. Furthermore, an electron emission film which was the most stable and had a favorable electron emission characteristic had the ratio (carbon having $sp^3$ bonds)/(carbon having $sp^2$ bonds) of 2.60 to 2.62.

Further, an electron emission film having the resistivity of 1kΩ·cm to 18kΩ·cm had a favorable electron emission characteristic.

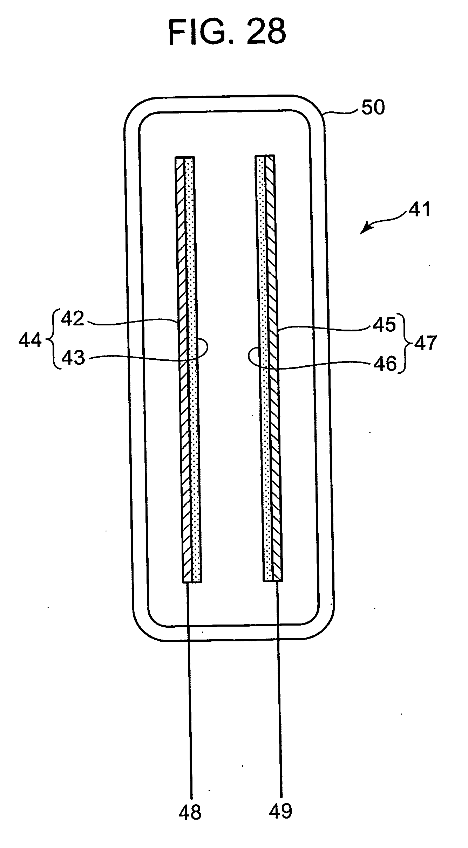

FIG. 28 is a diagram showing a fluorescent tube comprising the above-described electron emission film including diamond fine grains, in which an electron emission film 43 is formed on a substrate 42 comprising a semiconductor or a conductor. A carbon-nanowall may intervene between the electron emission film 43 and the substrate 42, as described in the embodiment 2. A cathode electrode 44 comprising the substrate 42 and the electron emission film 43 faces an anode electrode 47 which is apart from the cathode electrode 44 by a predetermined distance. The anode electrode 47 is disposed on a surface where an opposite conductor 45 and the electron emission film 43 face each other. The anode electrode 47 comprises a fluorescent film 46 which is formed to contact the opposite conductor 45. The opposite conductor 45 is preferably made of a material such as, for example ITO, that has a high transmissivity to the light emitted by the fluorescent film 46.

The cathode electrode 44 and the anode electrode 47 are sealed inside a glass tube 50 having an interior vacuum atmosphere. A wire 48 connected to the substrate 42 and a wire 49 connected to the opposite conductor 45 are led out from the glass tube 50. This kind of fluorescent tube 41 can emit light at a low threshold voltage.

A light source that comprises the electron emission film of the present invention can be applied to an FED (Field Emission Display), a backlight for a liquid crystal panel, and other light sources for home-use, or can be applied to a backlight for a personal computer, a digital camera, a cellular phone, etc., and a vehicle-mountable light source.

[Embodiment 3]

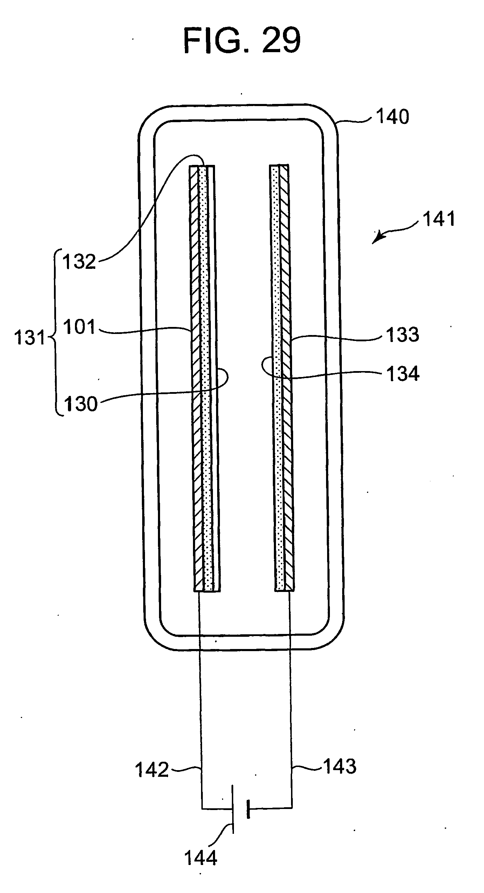

Another embodiment of the present invention will now be specifically explained with reference to the drawings. FIG. 29 is a diagram showing a fluorescent tube 141 that comprises a field emission electrode according to the present embodiment.

A field emission electrode 131 according to the present embodiment functions as a cathode electrode, and comprises an electron emission film 130 that is formed on a carbon-nanowall 132 as a base layer formed on a substrate 101. An anode electrode 133 comprises a transparent conductive film made of a transparent conductive material selected at least from tin-doped indium oxide (ITO; Indium Tin Oxide), zinc-doped indium oxide, indium oxiide ($In_2O_3$), tin oxide ($SnO_2$), zinc oxide (ZnO), and cadmium-tin oxide, or a conductive film made of an opaque conductive material such as nickel, aluminum, etc., and is disposed so as to face the field emission electrode 1 31 apart therefrom by a predetermined distance. The electron emission film 130 of the field emission electrode 131 is disposed on a surface facing the anode electrode 133, and a fluorescent film 134 which will emit light by being excited by electrons emitted from the electron emission film 130 is disposed between the anode electrode 133 and the field emission electrode 131.

The field emission electrode 131 and the anode electrode 133 are sealed inside a glass tube 140 having a vacuum atmosphere inside. A wire 142 made of nickel or the like and connected to the substrate 101 and a wire 143 made of nickel or the, like and connected to the anode electrode 133 are led out from the glass tube 140. The wire 142 and wire 143 that are led out are connected to a power source 144. The power source 144 causes a predetermined potential difference between the anode electrode 133 and the field emission electrode 131. At this time, cold electrodes emitted from the electron emission film 130 of the field emission electrode 131 due to the field are attracted toward the anode electrode 133 due to the field between the field emission electrode 131 and the anode electrode 133 to collide on the fluorescent film 134, which is thereby caused to emit visible light. Such a fluorescent tube 141 can emit light at a low threshold voltage. Further, since the electron emission characteristic of the electron emission film 130 has no hysteresis, the durability of the electron emission film 130 is high.

The above-described fluorescent tube 141 is one called a VFD (Vacuum Fluorescent Display) which causes light emission by causing cold electrons collide against the fluorescent film 134 by applying a predetermined voltage between the anode electrode 133 and the field emission electrode 131, and can also be used in an FED (Field Emission Display) that has a flat panel structure including a plurality of such light emission regions as pixels.

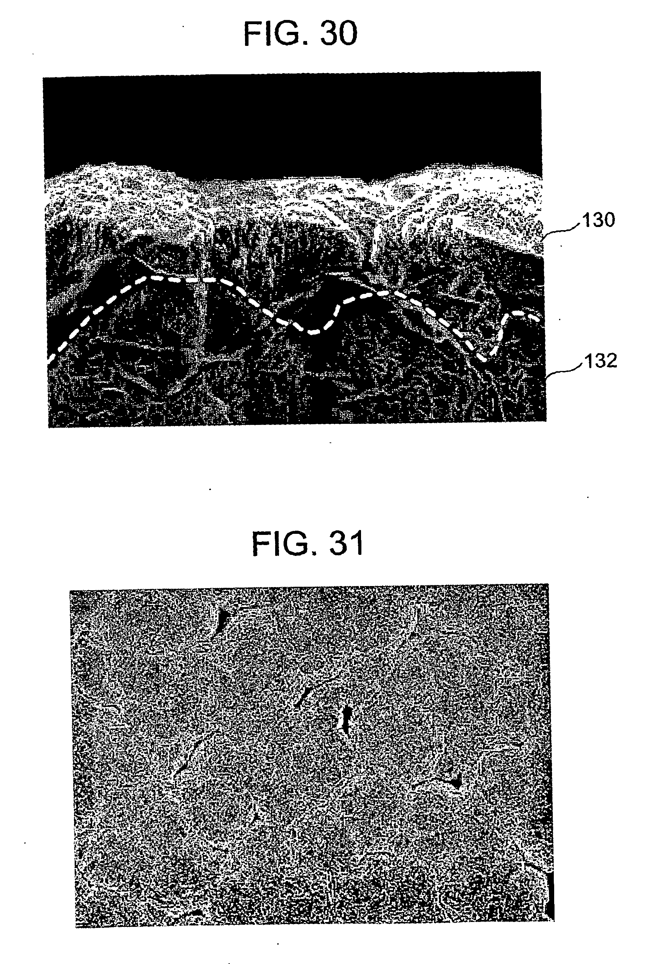

FIG. 30 is an image showing a cross section of the field emission electrode 131 of FIG. 29 obtained by a scanning electron microscope. The field emission electrode 131 according to the present embodiment comprises the carbon-nanowall 132 formed on the substrate 101, and the electron emission film 130 on the carbon-nanowall 132 including a plurality of diamond fine grains.

The carbon-nanowall 132 is formed of a plurality of carbon thin flakes of a petal (fan) shape having a curved surface which are uprightly bonded to the others in random directions. The carbon-nanowall 132 has a thickness of 0.1nm to 10$\mu$m. Each carbon thin flake is formed of several to several tens of graphene sheets having a lattice interval of 0.34nm.

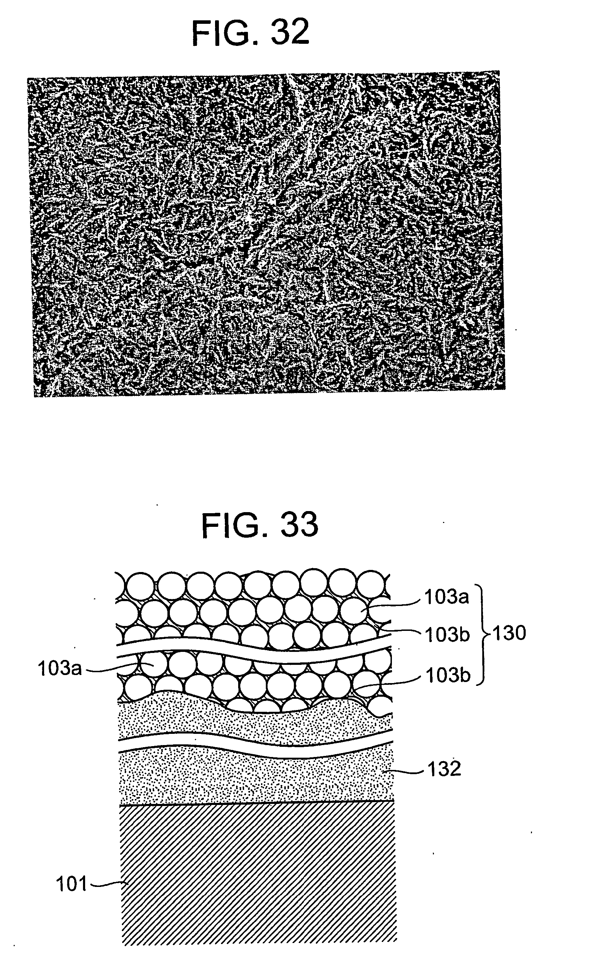

FIG. 31 is an image obtained by scanning the surface of the electron emission film 130 of FIG. 29 by using a scanning electron microscope. FIG. 32 is an image obtained by further expanding the image of the electron emission film 130 of FIG. 31. The electron emission film 130 includes a plurality of diamond fine grains having a grain diameter of 5nm to 10nm, and carbon including carbon having a graphite structure and deposited on the outermost surface and between the diamond fine grains. When seen from the top, tissues having a bamboo leaf shape made of several tens to several hundreds of aggregated diamond find grains are formed in the electron emission film 130, as shown in FIG. 32. That is, a plurality of bamboo-leaf-shaped tissues in the surface being aggregated, colonies having a generally circular dome shape when seen from the above are formed as shown in FIG. 31. The colonies, when being grown, contact the adjacent colonies to fill the clearances therebetween, and thereby form the electron emission film 130 whose surface is relatively smooth. The electron emission film 130 covers the carbon-nanowall 132. The diameter of the colonies in the electron emission film 130 is about 1$\mu$m to 5$\mu$m, and it is preferable that the colonies be grown to an extent enough to completely cover the carbon-nanowall 132 with no clearances left therein.

Although it is clear that the electron emission film 130 has the diamond structure not the diamond-like carbon (DLC) structure because diamond peaks were found in it by XRD measurement, it shows a very small resistivity of 20kΩ·cm or lower, as compared to the resistivity of smaller than $10^{16}$Ω·cm inherent in diamond. The resistivity of an electron emission film 130 having a favorable electron emission characteristic was 1 kΩ·cm to 18 kΩ·cm.

FIG. 33 is a model diagram showing a further-expanded cross section of the electron emission film 130 shown in FIG. 32 including bamboo-leaf-shaped tissues. The reference numeral 103a in FIG. 33 indicates diamond fine grains having a grain diameter of 5nm to 10nm, which are stacked in the thickness-wise direction. Carbon 103b having the graphite structure and formed of $sp^2$ bonds indicated as G band exists in the clearances in the aggregates of diamond fine grains 103a, 103a, .... Assuming that the thickness of the electron emission film 130 is 3μm, several hundreds of diamond fine grains are continuously stacked in the thickness-wise direction. These diamond fine grains are insulative, but the carbon 103b including carbon of $sp^2$ bonds existing in the clearances has conductivity due to its graphite structure, and therefore the film 130 as a whole has a conductivity.

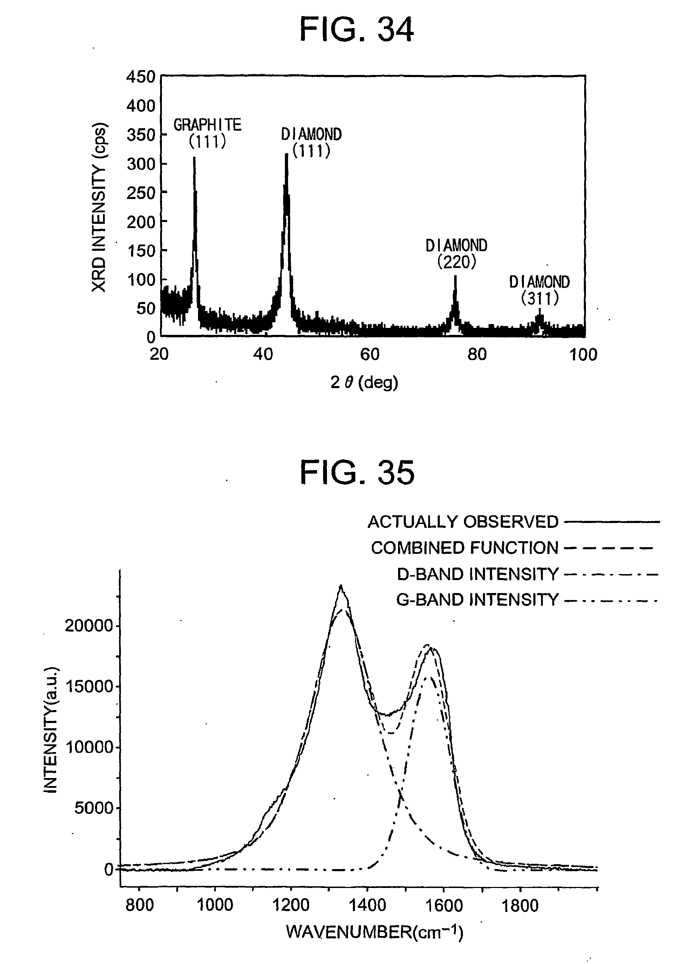

FIG. 34 is a diagram showing the spectrum of the electron emission film 130 obtained by XRD (X-Ray Diffraction spectroscopy).

Checking the X-ray diffraction pattern of the electron emission film 130, conspicuous peaks of diamond crystals and also a peak of crystalline carbon having the graphite structure are observed. The carbon having this crystalline graphite structure is the carbon-nanowall 132 as the base layer for the electron emission film 130.

FIG. 35 shows Raman spectrums obtained by performing Raman spectroscopy on the electron emission film 130 by using laser light having a wavelength of 532nm, and then by performing fitting of the spectrum to two pseudo Voigt functions. In FIG. 35, the solid line indicates actually-observed Raman spectrum values of the electron emission film 130, the broken line indicates values obtained by fitting the actually-observed values of the electron emission film 130, the dashed line indicates the D-band intensity after being fitted, and the double-dashed line indicates the G-band intensity after being fitted.

As a specific fitting method for obtaining the above-described spectrum curves, the portion of the actually-observed Raman spectrum that is between 750cm$^{-1}$ to 2000cm$^{-1}$ is extracted, and with the line that connects both ends (750cm$^{-1}$ and 2000cm$^{-1}$) of the extracted portion seen as a baseline, values existing on the baseline are eliminated from the spectrum. Then, as initial values, 1333cm$^{-1}$ and 1550cm$^{-1}$ are set as peak positions, heights are set to the actually-observed intensities of the Raman spectrum respectively at the wavenumber of 1333cm$^{-1}$ and the wavenumber of 1550cm$^{-1}$ and the line widths are respectively set to 200cm$^{-1}$ and 150cm$^{-1}$.

Then, by a nonlinear least-squares method, the spectrum is fit to pseudo-Voigt functions indicated by the following equation (1).

[Equation 1]

$$F(x) = a * [g * \exp(-(\sqrt{2} * (x - p) / w^2)) + (1 - g) * 1/(1 + (x - p)/w^2)]$$

where a = amplitude, g = Gauss/Lorenz ratio, p = peak position, and w = line width.

According to the nonlinear least-squares method, not only the peak intensity but also the peak position and the line width are allowed some tolerance, in fitting the spectrum to the pseudo-Voigt functions. Hence, as long as the initial values to be set first are appropriate ones, an optimum parameter that would restrict the error (x2) between the actually-observed spectrum and the set functions to the minimum can be obtained. Therefore, it is unnecessary to minutely and precisely set the peak wavelength. If spectrum fitting by the least-squares method under the following initial condition is available, a parameter that can have the optimum area ratio will be obtained. Though the nonlinear least-squares method is not algorithm-dependent, the Marquardt method is more preferable.

In this manner, the ratio of the area of the D band whose peak is at near 1333cm$^{-1}$ to the area of the G band whose peak is at near 1550cm$^{-1}$ is obtained in the form of a ratio (D-band intensity)/(G-band intensity). In FIG. 35, the broken line indicates the combined component of the D-band intensity and G-band intensity, the dashed line indicates the D-band intensity component extracted from the combined component, and the double-dashed line indicates the G-band intensity component extracted. The ratio (D-band intensity)/(G-band intensity) can be paraphrased as a ratio (the number of $sp^3$ bonds in the film)/(the number of $sp^2$ bonds in the film), i.e., a ratio (carbon having $sp^3$ bonds)/(carbon having $sp^2$ bonds).

Accordingly, although the electron emission film 30 is seemingly a single-layer film as a whole, it has, when microscopically seen, a complex structure including the aggregates of diamond fine grains 103a, 103a, ... formed of carbon of $sp^3$ bonds indicated as D band and having a grain diameter of about 5nm to 10nm, and the carbon 103b formed of $sp^2$ bonds showing the G-band intensity and existing between the diamond fine grains 103a, 103a, .... It is preferable that the ratio (D-band intensity)/(G-band intensity) is 2.5 to 2.7.

Assuming that the thickness of the electron emission film 130 is 3μm, several hundreds of diamond fine grains 103a are continuously stacked in the thickness-wise direction. These diamond fine grains 103a are themselves insulative, but the carbon 103b formed of sp$^2$ bonds existing in the clearances has conductivity, and therefore the electron emission film 130 as a whole has conductivity.

As described so far, the electron emission film 130 has been confirmed to include crystalline diamond in its composition from the X-ray diffraction pattern and to include carbon having sp$^2$ bonds having a broad peak whose half-value width is 50cm$^{-1}$ or more from the Raman spectroscopy spectrum, and to therefore have a complex structure including these. And since the electron emission film 130 shows conductivity, it can be confirmed that the carbon having sp$^2$ bonds other than the insulative crystalline diamond includes carbon having the conductive graphite structure. And it can be confirmed by using a scanning electron microscope that this carbon is very thinly stacked in the uppermost surface of the electron emission film 130.

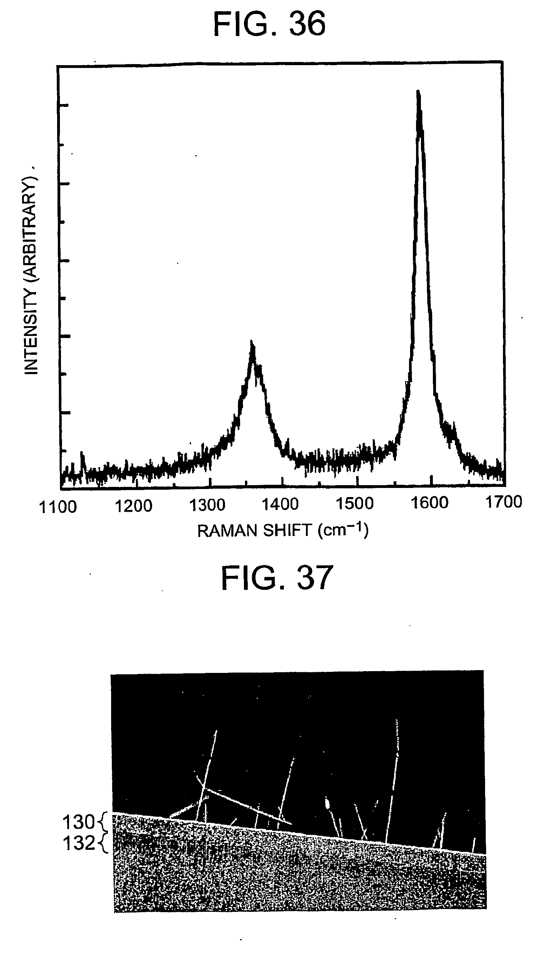

The spectrum of the carbon-nanowall 132 obtained by Raman spectroscopy is shown in FIG. 36. The carbon thin flakes of the carbon-nanowall 132 show a sharp ratio of intensity between a G-band peak at near 1580cm$^{-1}$ having a half-value width of less than 50cm$^{-1}$, which is due to the vibration of carbon atoms in the hexagon lattices formed by carbon-carbon bonds (sp$^2$ bonds) of the graphite structure, and a D-band peak at near 1350cm$^{-1}$ having a half-value width of less than 50cm$^{-1}$, and show almost no other peaks. It is therefore obvious that a carbon-nanowall 132 formed of a dense and highly-pure graphite structure has been grown.

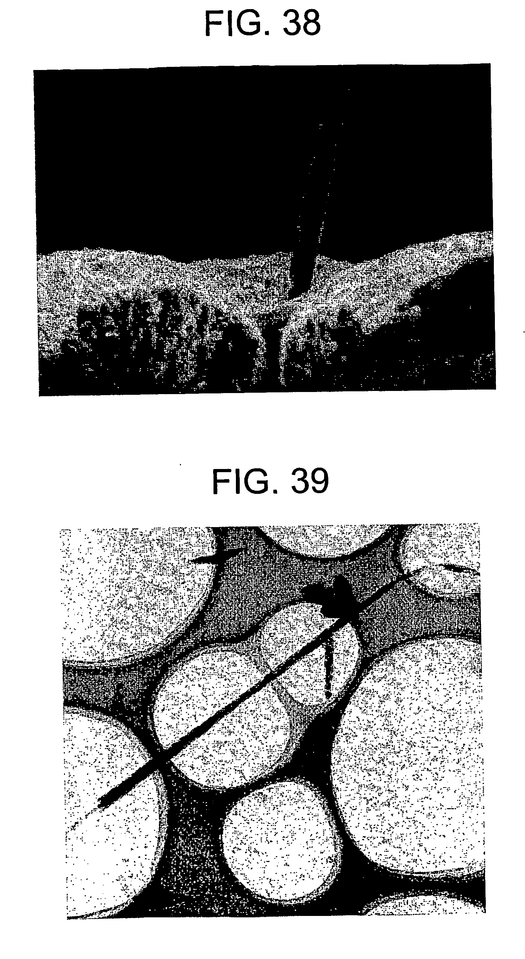

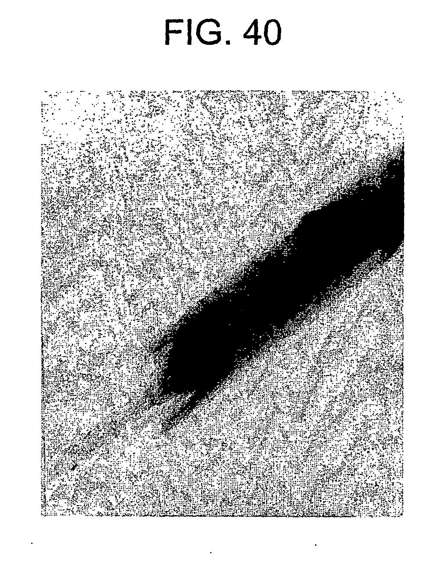

A plurality of needle-like sticks as shown in FIG. 37 are formed on the surface of the electron emission film 130 in a standing state. FIG. 38 is an image of the electron emission film 130 that is expanded from that shown in FIG. 37, obtained by a scanning electron microscope. FIG. 39 is an image of an extracted stick. FIG. 40 is an expanded image of the stick shown in FIG. 39. The stick has an aspect ratio where its length is about 10 or more, preferably 30 or more times larger than its diameter (round measure). The stick comprises carbon having sp$^2$ bonds having a diameter of about 10nm to 300nm, and is structured such that its central core is surrounded by a sheath.

The stick, which originates from the nucleus of carbon 103b including carbon having the graphite structure formed of sp$^2$ bonds existing between the diamond find grains 103a and 103a, is grown in the vertical direction with respect to the direction of the surface of the electron emission film 130. Thus, the stick stands through the clearance between the diamond fine grains 103a and 103a.

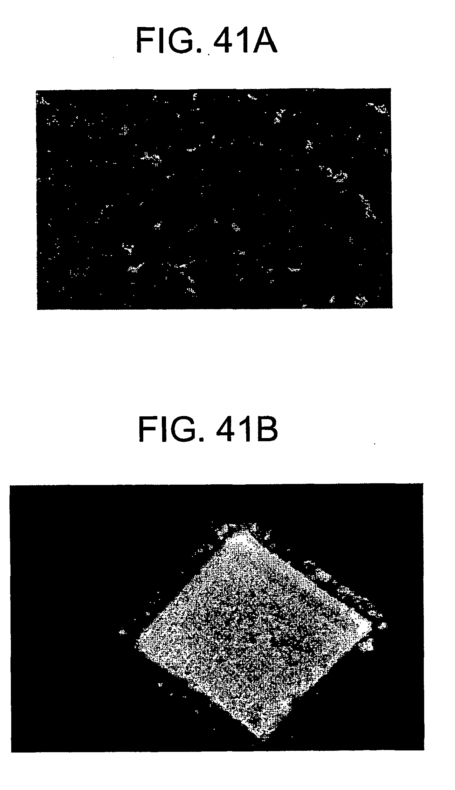

FIG. 41A is an image of the electron emission film 139 having the stick formed in its surface, obtained by a scanning electron microscope. FIG. 41B is a photographed image showing the state of light emission by the fluorescent tube 141 comprising the field emission electrode 131 in which the electron emission film of FIG. 41A is formed. The fluorescent tube 141 has a distance of 4.5mm between its field emission electrode and its anode electrode, and has a voltage of 6000V applied between these electrodes. To sample specific portions of the electron emission film that correspond to the portions of the fluorescent film from which light having the luminance of 70% or more of the highest luminance of all the values obtained from the fluorescent film is emitted, that is, to sample specific portions where the electron emission characteristic is favorable, the density of the number of sticks in that portions is 5000sticks/mm$^2$ to 20000sticks/mm$^2$. This portions hae the ratio (D-band intensity)/(G-band intensity), i.e., the ratio (carbon having sp$^3$ bonds)/(carbon having sp$^2$ bonds) of 2.6. Note that since the electric field is concentrated on the edge portion of the field emission electrode at the time of light emission and the field emission condition at the edge portion is therefore different from that of other portions, the light emission luminance at the portion of the fluorescent film 134 corresponding to the edge portion is not referred to as the highest luminance.

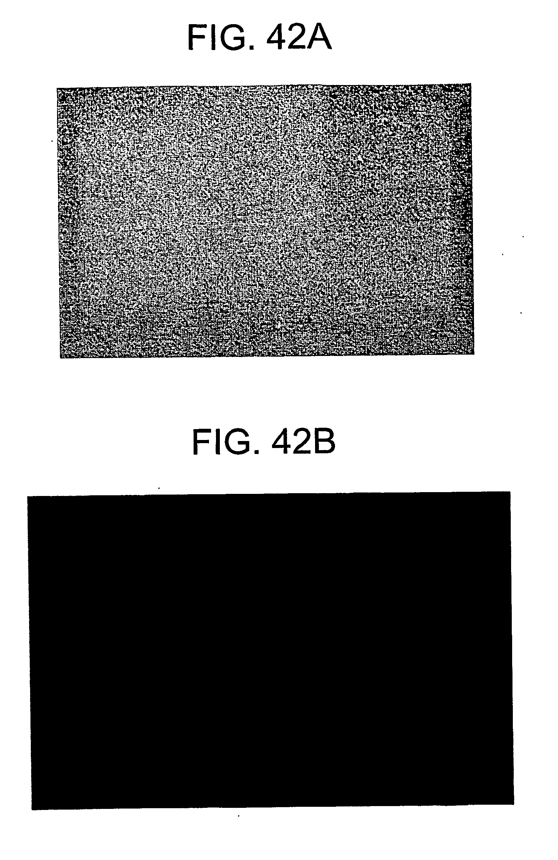

FIG. 42A is an image of an electron emission film having almost no stick in its surface, obtained by a scanning electron microscope, the ratio (carbon having sp$^3$ bonds)/(carbon having sp$^2$ bonds) of this electron emission film is 3.0. FIG. 42B is a photographed image showing the state of a voltage being applied, under the same condition as that of FIG. 41B, to a fluorescent tube comprising a field emission electrode in which the electron emission film shown in FIG. 42A is formed. Under this condition, the electron emission film having almost no stick formed in its surface does not trigger light emission, and is confirmed to have a worse electron emission characteristic than that of the electron emission film having sticks formed in its surface.

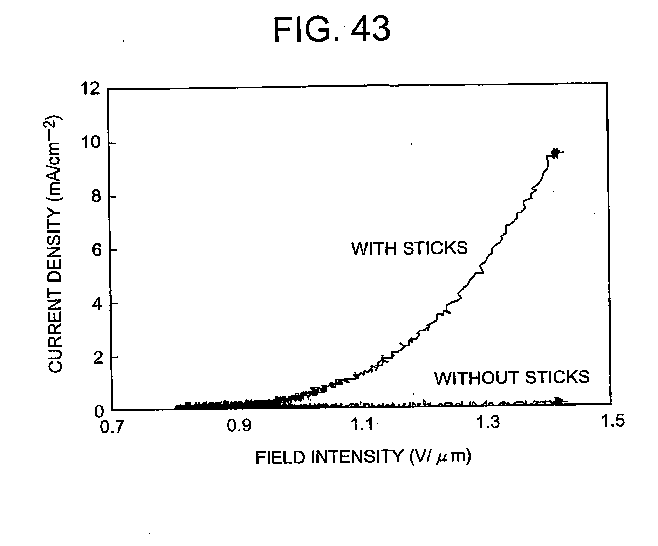

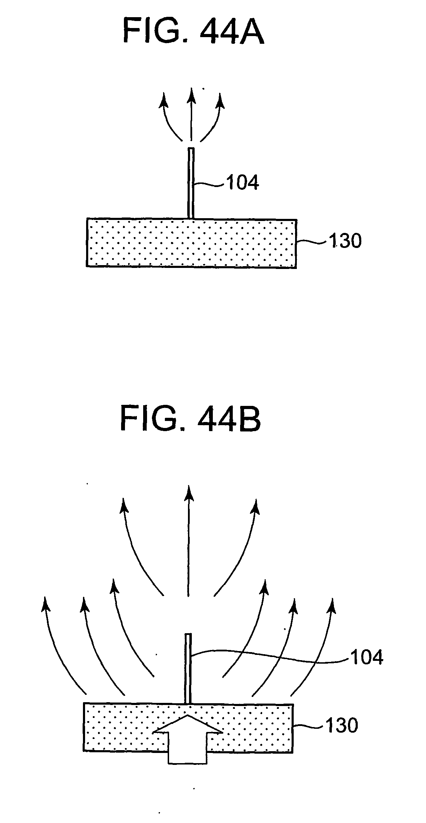

FIG. 43 shows current densities measured from the fluorescent tube with sticks shown in FIG. 41B, and those measured from the fluorescent tube without sticks shown in FIG. 42B. FIG. 44A and FIG. 44B are schematic diagrams showing the field emission characteristic of the electron emission film 130 having a stick 104 formed in its surface.

Since each diamond fine grain 103a in the electron emission film 130 has a negative electron affinity and has a very small grain diameter of 10nm or less, it can emit an electron by the tunnel effect. Furthermore, not only the carbon 103b including carbon having the graphite structure formed of sp$^2$ bonds that exists in the clearances between the diamond fine grains 103a and 103a at a predetermined abundance ratio imparts conductivity to the film as a whole to thereby facilitate field emission, but also it is so arranged that the diamond fine grains be not stacked so continuously that the tunnel effect cannot be obtained.

That is, if about a hundred diamond fine grains 103a having a grain diameter of 10nm are stacked in a predetermined direction with substantially no clearances therebetween, the thickness of the diamond will seemingly be 1000nm, which will substantially inhibit the occurrence of the tunnel effect even if a strong field is applied. However, since the presence of the carbon 103b including carbon having conductivity separates the respective diamond fine grains 103a, each diamond fine grain 103a can exhibit the tunnel effect.

This tunnel effect allows an electron emitted from the substrate 101 upon a voltage application to be once injected via the carbon-nanowall 132 into a diamond fine grain 103a located on the surface of the carbon-nanowall 132, field-emitted from this diamond fine grain 103a, and again injected into a diamond fine grain 103a adjacent to that diamond fine grain 103a in the field direction, subsequently repeatedly causing such electron emission in the field direction of the electron emission film 130 and finally causing the electron to be moved to the surface of the electron emission film 130.

If the electric field between the field emission electrode 131 and the anode electrode 133 is small, the field is concentrated on the stick 104 that sticks out from the electron emission film 130 because field concentration is less likely to occur on the electron emission film 130 due to its surface being flat, and an electron is therefore field-emitted from the tip of the stick 104. Since the stick 104 has the steric structure, the electron emission film 130 having the stick 104 can cause field emission even if the field intensity between the field emission electrode 131 and the anode electrode 133 is small, whereas the electron emission film 130 having no stick 104 cannot cause field emission under such a condition.

When the field intensity between the field emission electrode 131 and the anode electrode 133 is increased, not only the stick 104 but also the surface of the electron emission film 130 cause field emission as shown in FIG. 44B.

Almost no stick 104 is found in the carbon-nanowall 132. This is because the growing speed of the carbon-nanowall 132 on the substrate 101 is relatively high, and this allows no stick 104 to grow by exceeding the growing speed of the carbon-nanowall 142.

The electron emission film 130 grows slowly at a speed of about $1\mu$m/h, and grows not only in the direction perpendicular to surface of the substrate 101 but also in the surface direction radially, whereas the stick 104 grows only in one direction and therefore grows faster than the electron emission film 130. Since the stick 104, because of its sticking structure, gets hotter than the surface of the electron emission film 130 while grown by being heated by plasma CVD described later, such a factor that the graphite structure formed of $sp^2$ bonds whose range of appropriate growing temperatures is higher than that of the diamond structure formed of $sp^3$ bonds is more likely to grow, also adds to the faster growing of the stick 104.

The surface of the electron emission film 130 has not only the stick 104 formed as shown in FIG. 41A, but also has dust-like carbon formed. The dust-like carbon includes carbon having the graphite structure or carbon having an amorphous structure, and is twined around the base of the stick 104, etc. The length of the portion of the stick 104 around which the dust-like carbon is twined is 50% or less than the total length of the stick 104.

With the dust-like carbon formed, the stick 104 has its surface area increased and thus can have its exoergicity improved. This prevents the adsorption gas from desorpting, prevents the ion bombardment on the electron emission film 130 by desorpting gas, and further prevents the tissue destruction due to the thermal vaporization of the stick 104. Furthermore, the dust-like carbon supports the thin stick 104 to save the stick from falling down or breaking down, and can improve the conductivity at the portion where the dust-like carbon contacts the stick 104.

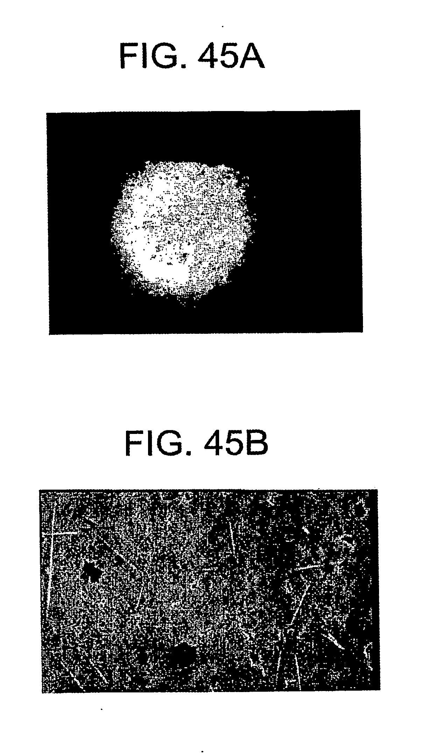

FIG. 45A is an image showing the state of light emission by a fluorescent tube comprising the field emission electrode 131 including the electron emission film 130, which film is sampled at about ten specific portions that correspond to the portions of the fluorescent film 134 from which light having the luminance of 70% or more of the highest luminance (cd/m$^2$) of all the values obtainable from the fluorescent film 134 is emitted under the conditions that the distance between the field emission electrode 131 and the anode electrode is 4.5mm and a voltage of 6000V is applied between these electrodes, i.e., sampled at about ten specific portions where the electron emission characteristic is favorable, with the sampling result that the density of the number of sticks 104 at the about ten specific portions is between 5000sticks/mm$^2$ to 15000stick/mm$^2$. FIG. 45B is a photographed image of the surface of the electron emission film 130 of FIG. 45A, obtained by a scanning electron microscope. The time required to form the electron emission film 130 by DC plasma is three hours, and the heating temperature during the film formation is 905°C.

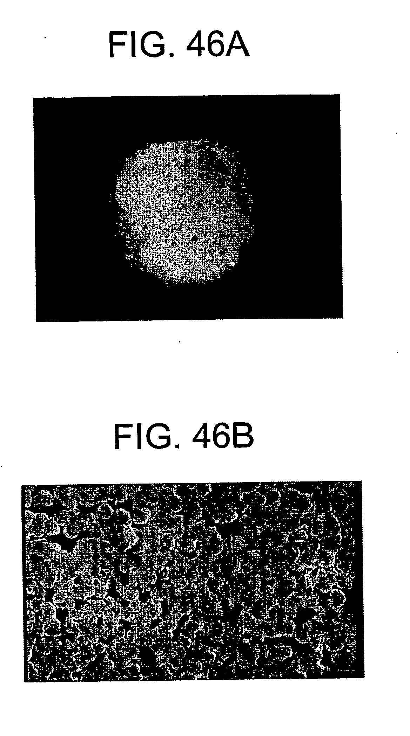

FIG. 46A is an image showing the state of light emission by a fluorescent tube comprising the field emission electrode 131 including the electron emission film 130, which film is sampled at about ten specific portions that correspond to the portions of the fluorescent film 134 from which light having the luminance of 70% or more of the highest luminance (cd/m$^2$) of all the values obtainable from the fluorescent film 134 is emitted under the conditions that the distance between the field emission electrode 131 and the anode electrode is 4.5mm and a voltage of 6000V is applied between these electrodes, i.e., sampled at about ten specific portions where the electron emission characteristic is favorable, with the sampling result that the density of the number of sticks 104 at the about ten specific portions is between 15000sticks/mm$^2$ to 25000stick/mm$^2$. FIG. 46B is a photographed image of the surface of the electron emission film 130 of FIG. 46A, obtained by a scanning electron microscope. The time required to form the electron emission film 130 by DC plasma is two hours, and the heating temperature during the film formation is 905°C. Accordingly, it is confirmed that if the electron emission film 130 is heated by DC plasma to 905°C, the density of the number of sticks 104 lowers after two hours of heating time passes and before three hours of heating time passes. This is because the dust-like carbon to be described later grows in the surface of the electron emission film 130 together with the sticks 104 and covers the sticks 104, so that the sticks 104 seemingly disappear.

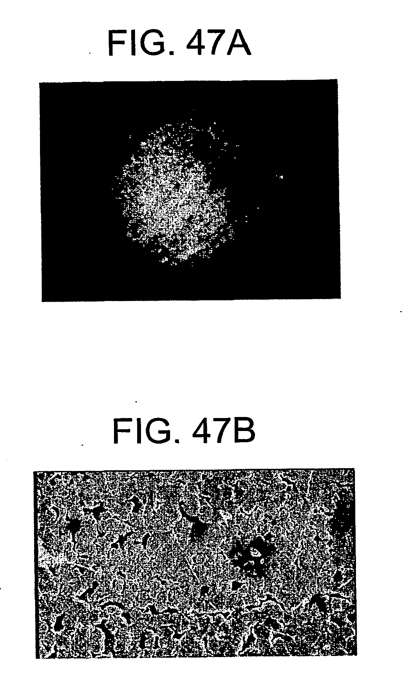

FIG. 47A is an image showing the state of light emission by a fluorescent tube comprising the field emission electrode 131 including the electron emission film 130, which film is sampled at about ten specific portions that correspond to the portions of the fluorescent film 134 from which light having the luminance of 70% or more of the highest luminance $(cd/m^2)$ of all the values obtainable from the fluorescent film 134 is emitted under the conditions that the distance between the field emission electrode 131 and the anode electrode is 4.5mm and a voltage of 6000V is applied between these electrodes, i.e., sampled at about ten specific portions where the electron emission characteristic is favorable, with the sampling result that the density of the number of sticks 104 at the about ten specific portions is between $45000sticks/mm^2$ to $55000stick/mm^2$. FIG. 47B is a photographed image of the surface of the electron emission film 130 of FIG. 47A, obtained by a scanning electron microscope.

The time required to form the electron emission film 130 by DC plasma is two hours, and the heating temperature during the film formation is 900°C. Accordingly, by slightly lowering the film forming temperature from 905°C, it is possible to increase the density of the number of sticks 104. However, since the electron emission film 130 shown in FIG. 47B has its sticks 104 formed too thin and does not have the dust-like carbon formed sufficiently, the dust-like carbon cannot fully support the sticks 104 to thereby have the sticks 104 fall down during their growing, resulting in a worse field emission characteristic than that of the fluorescent tubes shown in FIG. 45A and FIG. 46A.

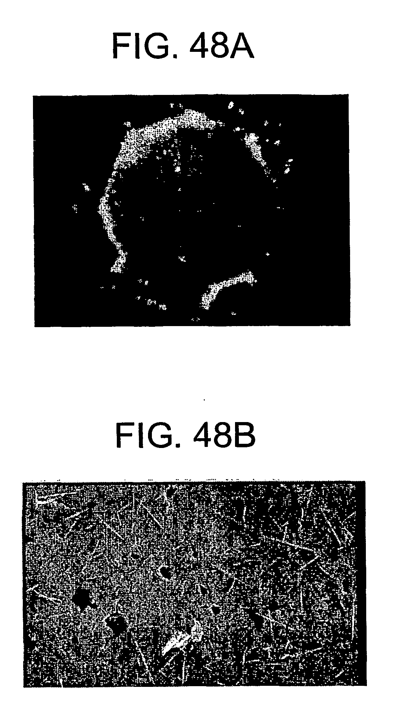

FIG. 48A is an image showing the state of light emission by a fluorescent tube comprising the field emission electrode 131 including the electron emission film 130, which film is sampled at about ten specific portions that correspond to the portions of the fluorescent film 134 from which light having the luminance of 70% or more of the highest luminance $(cd/m^2)$ of all the values obtainable from the fluorescent film 134 is emitted under the conditions that the distance between the field emission electrode 131 and the anode electrode is 4.5mm and a voltage of 6000V is applied between these electrodes, i.e., sampled at about ten specific portions where the electron emission characteristic is favorable, with the sampling result that the density of the number of sticks 104 at the about ten specific portions is between $65000sticks/mm^2$ to $75000stick/mm^2$. FIG. 48B is a photographed image of the surface of the electron emission film 130 of FIG. 48A, obtained by a scanning electron microscope.

The time required to form the electron emission film 130 by DC plasma is two hours, and the heating temperature during the film formation is 913°C. Accordingly, also by slightly raising the film forming temperature from 905°C, it is possible to increase the density of the number of sticks 104. However, the electron emission film 130 shown in FIG. 48B has its sticks 104 formed too thin and has the sticks 104 fall down during their growing, resulting in a worse field emission characteristic than that of the fluorescent tubes shown in FIG. 45A and FIG. 46A.

The growing speed of the diamond fine grain 103a, the carbon 103b, the stick 104, and the dust-like carbon in the electron emission film 130 is affected by various factors such as the material gas pressure and the gas convection in the DC plasma system, the shape and size of the positive electrode and negative electrode in the system, the distance between the positive electrode and the negative electrode, etc., and is not determined only by the film forming temperature and film forming time.

The electron emission film 130 whose stick number density is $5000sticks/mm^2$ to $15000stick/mm^2$ has the most favorable electron emission characteristic, followed by the electron emission film 130 whose stick number density is $15000sticks/mm^2$ to $25000stick/mm^2$, the electron emission film 130 whose stick number density is $45000sticks/mm^2$ to $55000stick/mm^2$, and the electron emission film 130 whose stick number density is $65000sticks/mm^2$ to $75000stick/mm^2$, in this order.

The method of manufacturing the electron emission film 130 will now be explained.

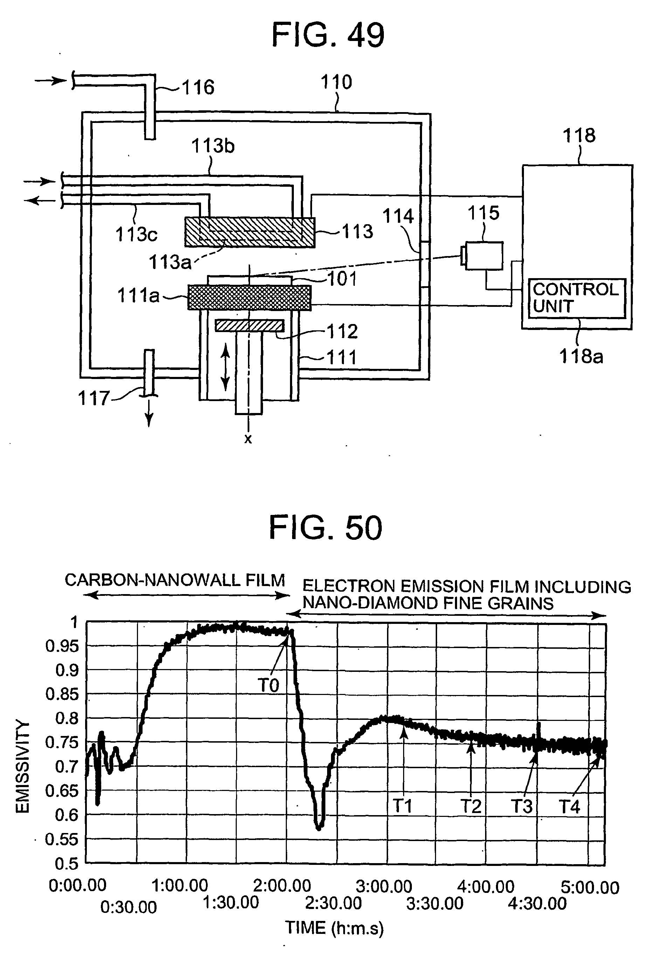

A DC plasma CVD system shown in FIG. 49 is a system for forming a film on the surface of the process-target substrate 101, and comprises a chamber 110 for shutting the substrate 101 from the surrounding atmosphere.

The chamber 110 has a table 111 thereinside, and a positive electrode 111a having a disk-like shape is mounted on the upper portion of the table 111. The substrate 101 is fixed on the upper placement surface of the positive electrode 111a. The table 111 is designed to rotate together with the positive electrode 111a about an axis "x".

A cooling member 112 is disposed under the lower surface of the positive electrode 111a, and is structured to move upward and downward by an unillustrated moving system. The cooling member 112 is made of metal having a high heat conductivity such as copper, etc., and includes therein an unillustrated cooling medium such as water, calcium chloride aqueous solution, or the like that circulates therein to cool the entire cooling member 112. The cooling member 112 abuts on the positive electrode 111a by moving upward, and steals the heat from the substrate 101 via the positive electrode 111a.

A negative electrode 113 is disposed above the positive electrode 111a so as to face the positive electrode 111a with a predetermined distance therebetween.

A flow path 113a through which a cooling medium flows is formed in the negative electrode 113, and tubes 113b and 113c are connected to both ends of the flow path 113a. The tubes 113b and 113c go through the holes formed in the chamber 110 and lead to the flow path 113a. The holes in the chamber 110 passed through by the tubes 113b and 113c are sealed by a sealing agent to ensure the airtightness in the chamber 110. The tube 113b, the flow path 113a, and the tube 113c restricts the heat generation of the negative electrode 113, by letting a cooling medium flow therethrough. Water, calcium chloride aqueous solution, air, inert gas, or the like is preferable as the cooling medium.

A window is formed in a side wall of the chamber 110, allowing the interior of the chamber 110 to be observed. Glass is set inside the window 114 to ensure the airtightnes in the chamber 110. A radio-spectrometer 115 is disposed outside the chamber 110, for measuring the temperature of the substrate 101 via the glass of the window 114.

This DC plasma CVD system comprises a material system (unillustrated) for introducing material gas through a gas supply pipe 116, a gas ejection system (unillustrated) for adjusting the atmospheric pressure in the chamber 110 by ejecting gaseous body from the chamber 110 through a gas ejection pipe 117, and an output setting unit 118.

The pipes 116 and 117 passes through holes formed in the chamber 110. A sealing agent seals between these holes, the circumference of the pipes 116 and 117, and the chamber 110 to ensure the airtightness in the chamber 110.

The output setting unit 118 is a means for setting the voltage or the current density between the positive electrode 111a and the negative electrode 113, and is connected to the positive electrode 111a and to the negative electrode 113 by lead lines respectively. Each lead line passes through a hole formed in the chamber 110. The holes in the chamber 110 passed through by the lead lines are sealed by a sealing agent.

The output setting unit 118 comprises a control unit 118a, and the control unit 118a is connected to the radio-spectrometer 115 by a lead line. The control unit 118a, when activated, refers to the temperature of the film forming surface of the substrate 101 based on the emissivity of the film forming surface measured by the radio-spectrometer 115, and adjusts the voltage or the current density between the positive electrode 111a and the negative electrode 113 so that the temperature of the film forming surface of the substrate 101 will be an intended value.

Next, a film forming process for forming the electron emission film 130 by using the DC plasma CVD system of FIG. 49 to thereby form a field emission electrode, will be explained.

In this film forming process, an electron emission film 20 which comprises a layer including the carbon-nanowall 132 and the electron emission film 130 formed on the carbon-nanowall 132 and including a plurality of diamond fine grains, is to be formed on the surface of the substrate 101 made of nickel or the like.

First, for example, a nickel plate is cut into substrates 101, and the substrate 101 is degreased and ultrasonic-cleaned sufficiently by using ethanol or acetone. The substrate 101 is fixed on the placement surface of the positive electrode 111a in the DC plasma CVD system.

When the substrate 101 is fixed, the interior of the chamber 110 is depressurized by the gas ejection system, and then hydrogen gas and gas comprising a compound (carbon-containing compound) that contains carbon in its composition such as methane are introduced through the gas supply pipe 116. The gas supply pipe 116 may include separate pipes for hydrogen gas and methane respectively, or may include one pipe in case the gases are mixed.

It is preferable that the gas comprising a compound that contains carbon in its composition is 3vol% to 30vol% of the whole material gas. For example, the mass flow of methane is set at 50 SCCM while that of hydrogen is set at 500 SCCM, and the whole pressure is set at 0.05 to 1.5 atm, preferably at 0.07 to 0.1 atm. The positive electrode 111a together with the substrate 101 is rotated at 10 rpm, and a DC power is applied between the positive electrode 111a and the negative electrode 113 to generate plasma, in a manner that the temperature variation on the substrate 101 is restricted within 5°C and the state of plasma and the temperature of the substrate 10 1 are controlled.

For forming the carbon-nanowall 132, the temperature of the portion of the substrate 101 where the carbon-nanowall 132 is to be formed is maintained at 900°C to 1100°C and the film formation is carried out for a predetermined time. Radiation from the surface of the carbon-nanowall 132 being formed is measured by the radio-spectrometer 115. At this time, the cooling member 112 is set sufficiently apart from the positive electrode 111a, so that the temperature of the positive electrode 111a will not be affected. The radio-spectrometer 115 is designed to measure the temperature only from the thermal radiation from the surface of the substrate 101, by subtracting plasma radiation of the DC plasma CVD system, as shown in FIG. 50. When the carbon-nanowall 132 as the base layer has been sufficiently formed, with the gas atmosphere unchanged, the cooling member 112 retaining a much lower temperature than that of the positive electrode 111a having been heated by plasma, is lifted upward to abut on the lower surface of the positive electrode 111a (at a timing T0).

At this time, the cooled positive electrode 111a cools the substrate 101 fixed thereon, and as shown in FIG. 50, the surface of the substrate 101 is rapidly cooled down to an appropriate temperature for forming a film of a plurality of diamond fine grains 103a, which is 10°C or more lower than that when the carbon-nanowall 132 was being formed. At this time, the temperature is set to 890°C to 950°C, preferably to 920°C to 940°C. Note that it is preferable that the value of the voltage to be applied or current to be applied between the positive electrode 111a and the negative electrode 113 be not changed at the timing T0. Since the emissivity of the carbon-nanowall 132 is almost 1 because of its graphite structure formed of $sp^2$ bonds, using the carbon-nanowall 132 as the base film and setting 0.7 as the emissivity of the upper film in accordance with the diamond fine grains 103a as the main component of the upper film would allow the film forming state of the diamond fine grains 103a to be controlled and the temperature to be measured stably.

Since the substrate 101 is cooled down rapidly at the timing T0, the growth of the carbon-nanowall 132 is stopped, and the plurality of diamond fine grains 103a start to grow from the nuclei of carbon-nanowall 132, eventually forming the electron emission film 130 on the carbon-nanowall 132, that includes the plurality of diamond fine grains 103a having a grain diameter of 5nm to 10nm formed of $sp^3$ bonds and the conductive carbon 103b formed of $sp^2$ bonds and existing in the clearances between the diamond fine grains 103a. In the process of the diamond fine grains 103a and carbon 103b growing, the sticks 104 are grown from such carbon 103b, which is exposed on the surface of the electron emission film 130.

When the cooling member 112 abutting on the positive electrode 111a is moved downward, the emissivity starts to rise together with the surface temperature of the substrate 101 due to the plasma. At this time, if the temperature rise is up to 950°C, the diamond fine grain 103a and the carbon 103b continue to grow without switching to grow into the carbon-nanowall 132.

By the manufacturing method described above, the state of the electron emission film 130 was checked at the timing T1, the timing T2, the timing T3, and the timing T4 shown in FIG. 50, at which the plasma output from the DC plasma CVD system was stopped.

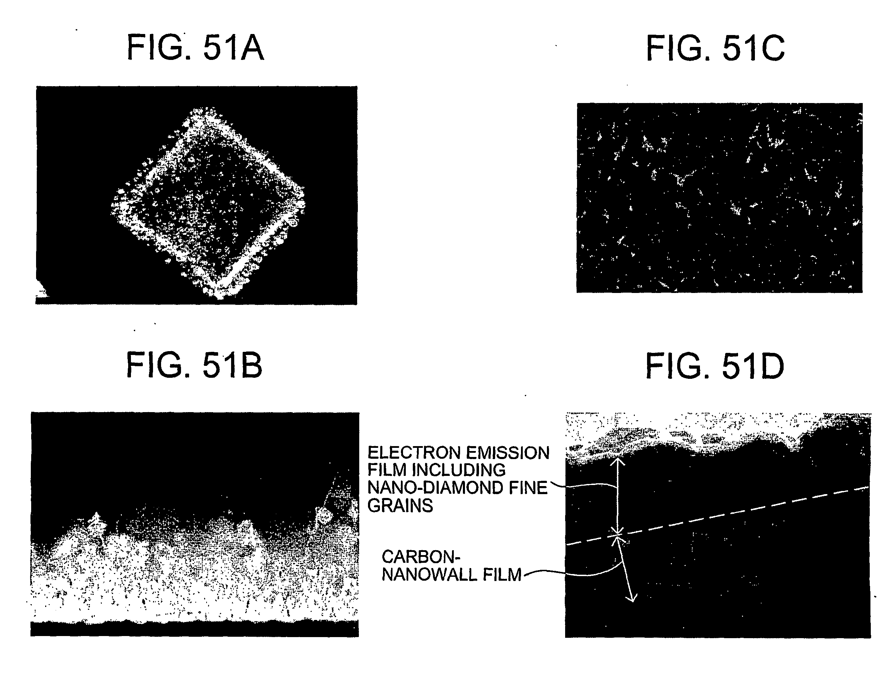

FIG. 51A is an image showing the state of light emission by the fluorescent tube 141 which employs the electron emission film 130, for which the plasma output was stopped at the timing T1 during the DC plasma manufacturing. FIG. 51B is a photographed image of the surface of the electron emission film 130 of FIG 51A, obtained by a scanning electron microscope. FIG. 51C is a photographed image of the surface of the electron emission film 130 of FIG. 51A, obtained by a scanning electron microscope. FIG. 51D is a photographed image of a cross section of the field emission electrode 131 of FIG. 51A, obtained by a scanning electron microscope.

Under conditions that the distance between the field emission electrode 131 and the anode electrode 133 was 4.5mm and a voltage of 6000V was applied between these electrode to cause light emission, about 10 portions of the electron emission film 130 that correspond to the portions of the fluorescent film 134 from which light having the luminance of 70% or more of the highest luminance (cd/$m^2$) of all the values obtained from the fluorescent film 134 was emitted, i.e., about 10 portions of the electron emission film 130 where the electron emission characteristic was favorable were sampled, with a sampling result that the density of the number of sticks 104 was 17000sticks/$mm^2$ to 21000sticks/$mm^2$. The ratio (number of $sp^3$ bonds in the film)/(number of $sp^2$ bonds in the film) of the electron emission film 130 was 2.50. As shown in FIG. 51B and FIG. 51C, sticks 104 and dust-like carbon twining around the sticks 104 were already formed.

Note that since the electric field was concentrated on the edge portion of the field emission electrode 131 at the time of light emission and the field emission condition at the edge portion was therefore different from that of other portions, the light emission luminance at the portion of the fluorescent film 134 corresponding to the edge portion was not referred to as the highest luminance.

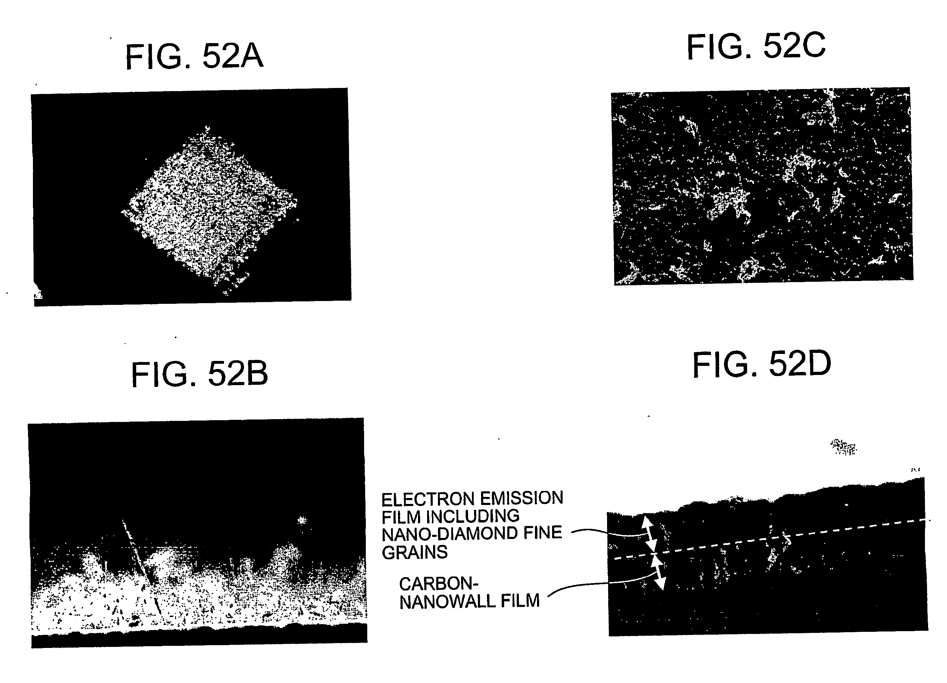

FIG. 52A is an image showing the state of light emission by the fluorescent tube 141 which employs the electron emission film 130, for which the plasma output was stopped at the timing T2 during the DC plasma manufacturing. FIG. 52B is a photographed image of the surface of the electron emission film 130 of FIG 52A, obtained by a scanning electron microscope. FIG. 52C is a photographed image of the surface of the electron emission film 130 of FIG. 52A, obtained by a scanning electron microscope. FIG. 52D is a photographed image of a cross section of the field emission electrode 131 of FIG. 52A, obtained by a scanning electron microscope.

Under conditions that the distance between the field emission electrode 131 and the anode electrode 133 was 4.5mm and a voltage of 6000V was applied between these electrode to cause light emission, about 10 portions of the electron emission film 130 that correspond to the portions of the fluorescent film 134 from which light having the luminance of 70% or more of the highest luminance (cd/$m^2$) of all the values obtained from the fluorescent film 134 was emitted, i.e., about 10 portions of the electron emission film 130 where the electron emission characteristic was favorable were sampled, with a sampling result that the density of the number of sticks 104 was 16000sticks/$mm^2$ to 20000sticks/$mm^2$. The ratio (number of $sp^3$ bonds in the film)/(number of $sp^2$ bonds in the film) of the electron emission film 130 was 2.52. As shown in FIG. 52B and FIG. 52C, sticks 104 and dust-like carbon twining around the sticks 104 were formed but had some of them lost as compared to those shown in FIG. 51B and 51C. This is because the speed of etching by the plasma was higher than the speed of growing by the plasma.

Note that since the electric field was concentrated on the edge portion of the field emission electrode 131 at the time of light emission and the field emission condition at the edge portion was therefore different from that of other portions, the light emission luminance at the portion of the fluorescent film 134 corresponding to the edge portion was not referred to as the highest luminance.

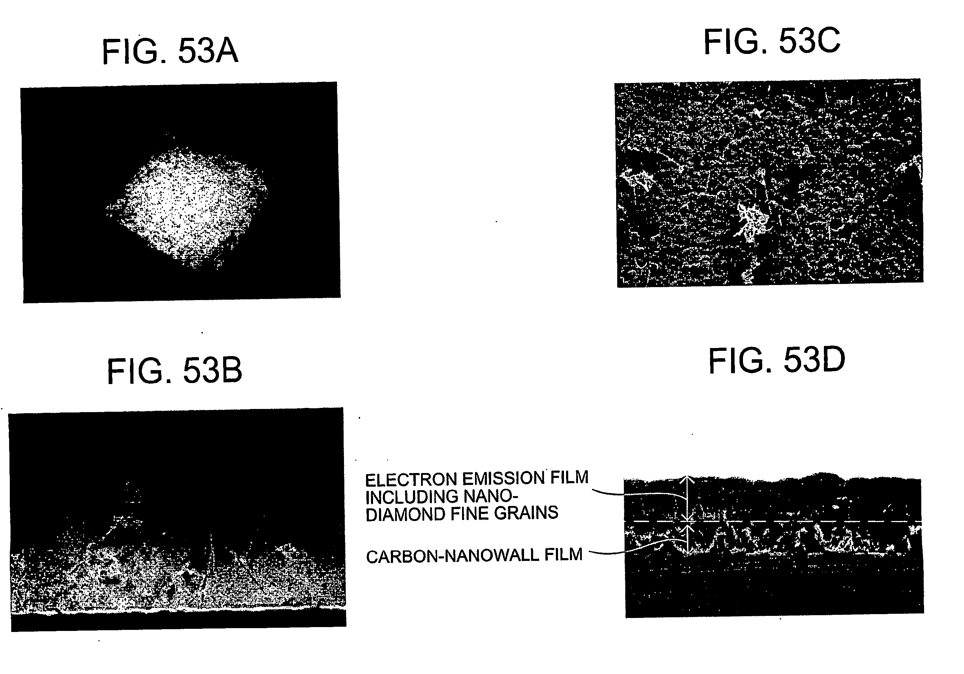

FIG. 53A is an image showing the state of light emission by the fluorescent tube 141 which employs the electron emission film 130, for which the plasma output was stopped at the timing T3 during the DC plasma manufacturing. FIG. 53B is a photographed image of the surface of the electron emission film 130 of FIG 53A, obtained by a scanning electron microscope. FIG. 53C is a photographed image of the surface of the electron emission film 130 of FIG. 53A, obtained by a scanning electron microscope. FIG. 53D is a photographed image of a cross section of the field emission electrode 131 of FIG. 53A, obtained by a scanning electron microscope.

Under conditions that the distance between the field emission electrode 131 and the anode electrode 133 was 4.5mm and a voltage of 6000V was applied between these electrode to cause light emission, about 10 portions of the electron emission film 130 that correspond to the portions of the fluorescent film 134 from which light having the luminance of 70% or more of the highest luminance ($cd/m^2$) of all the values obtained from the fluorescent film 134 was emitted, i.e., about 10 portions of the electron emission film 130 where the electron emission characteristic was favorable were sampled, with a sampling result that the density of the number of sticks 104 was 8000sticks/$mm^2$ to 12000sticks/$mm^2$. The ratio (number of $sp^3$ bonds in the film)/(number of $sp^2$ bonds in the film) of the electron emission film 130 was 2.60. As shown in FIG. 53B and FIG. 53C, sticks 104 and dust-like carbon twining around the sticks 104 were formed but had some of them lost as compared to those shown in FIG. 52B and 52C. This is because the speed of etching by the plasma was higher than the speed of growing by the plasma. Some portions of the electron emission film 130 once grown by the plasma were caused to be lost by etching.

Note that since the electric field was concentrated on the edge portion of the field emission electrode 131 at the time of light emission and the field emission condition at the edge portion was therefore different from that of other portions, the light emission luminance at the portion of the fluorescent film 134 corresponding to the edge portion was not referred to as the highest luminance.

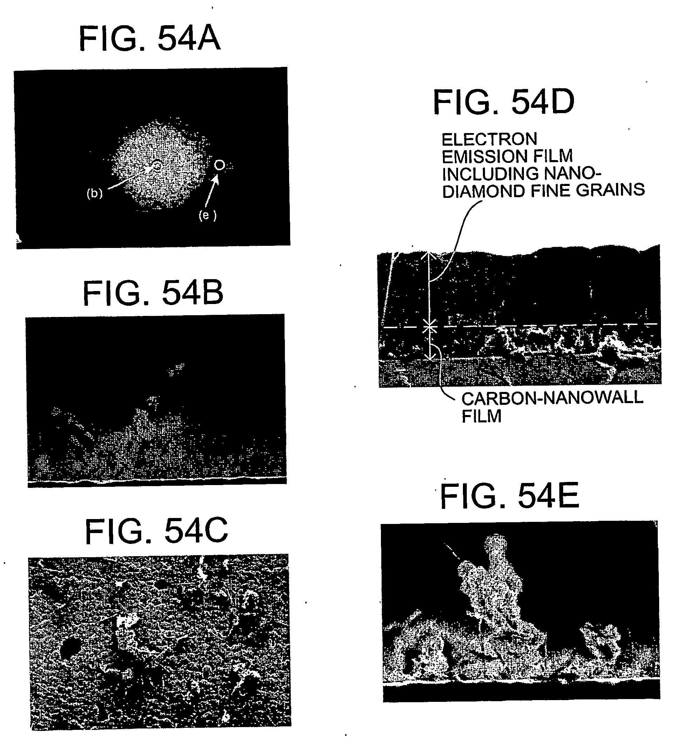

FIG. 54A is an image showing the state of light emission by the fluorescent tube 141 which employs the electron emission film 130, for which the plasma output was stopped at the timing T4 during the DC plasma manufacturing. FIG. 54B is a photographed image of the surface of the electron emission film 130 at a position (b) of FIG 54A, obtained by a scanning electron microscope. FIG. 54C is a photographed image of the surface of the electron emission film 130 of FIG. 54A, obtained by a scanning electron microscope. FIG. 54D is a photographed image of a cross section of the field emission electrode 131 of FIG. 54A, obtained by a scanning electron microscope. FIG. 54E is a photographed image of the surface of the electron emission film 130 at an edge position (e) of FIG. 54A, obtained by a scanning electron microscope.

Under conditions that the distance between the field emission electrode 131 and the anode electrode 133 was 4.5mm and a voltage of 6000V was applied between these electrode to cause light emission, about 10 portions of the electron emission film 130 that correspond to the portions of the fluorescent film 134 from which light having the luminance of 70% or more of the highest luminance ($cd/m^2$) of all the values obtained from the fluorescent film 134 was emitted, i.e., about 10 portions of the electron emission film 130 where the electron emission characteristic was favorable were sampled, with a sampling result that the density of the number of sticks 104 was 5000sticks/$mm^2$ to 9000sticks/$mm^2$. The ratio (number of $sp^3$ bonds in the film)/(number of $sp^2$ bonds in the film) of the electron emission film 130 was 2.55. As shown in FIG. 54B and FIG. 54C, sticks 104 and dust-like carbon twining around the sticks 104 were formed but had some of them lost as compared to those shown in FIG. 53B and 53C. This is because the speed of etching by the plasma was higher than the speed of growing by the plasma.

Furthermore, etching on some portions of the electron emission film 130 once grown by the plasma was more proceeding than as shown in FIG. 53C. Note that since the electric field was concentrated on the edge portion of the field emission electrode 131 at the time of light emission and the field emission condition at the edge portion was therefore different from that of other portions, the light emission luminance at the portion of the fluorescent film 134 corresponding to the edge portion was not referred to as the highest luminance.

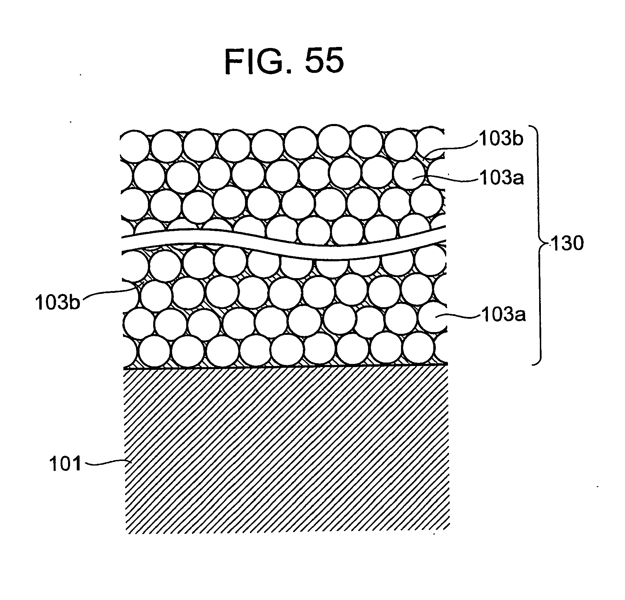

In the above-described embodiment, the carbon-nanowall 132 was formed between the substrate 101 and the electron emission film 130. However, also by forming the electron emission film 130 directly on the substrate 101 as shown in FIG. 55, it is possible to form the sticks 104 and the dust-like carbon likewise the above-described embodiment.

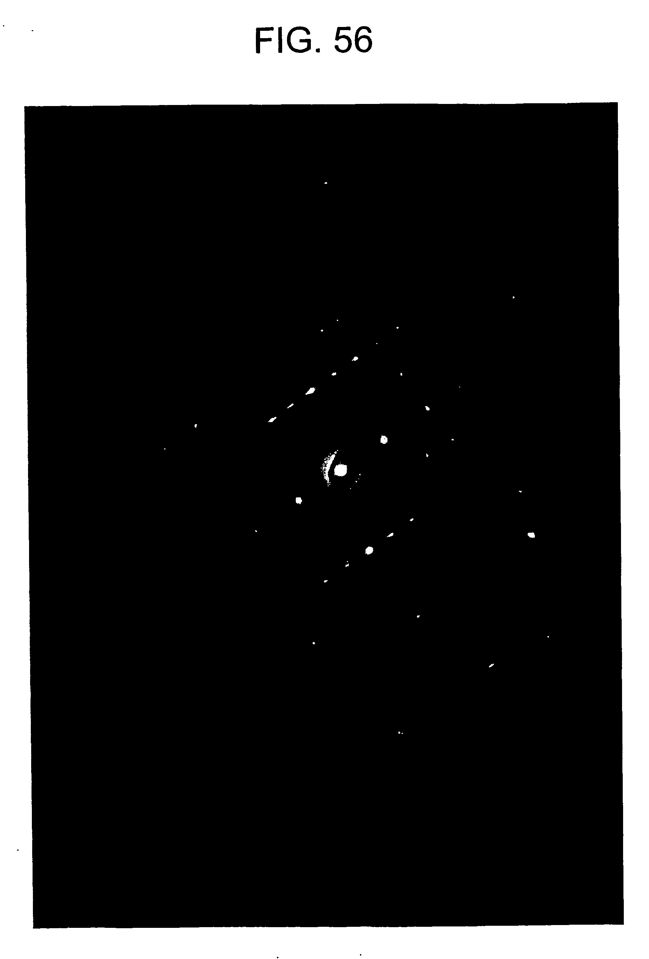

FIG. 56 shows an electron diffraction image of needle-like sticks. The interval between these sticks on the latticed surface is 0.34nm, which corresponds to the surface interval of the graphite structure. Since an electron emission film having sticks formed has a more favorable discharge characteristic than an electron emission film having no sticks formed, it can be considered that the sticks themselves have conductivity. It can therefore be confirmed that the sticks are formed of the graphite structure of $sp^2$ bonds.

A light source comprising the field emission electrode according to the present invention can be applied not only to an FED, but also to a backlight for a liquid crystal panel and other home-use light sources, and furthermore to light sources for a personal computer, a digital camera, a cellular phone, etc. and to a vehicle-mountable light source.

The above-described embodiments are intended to illustrate the present invention, not to limit the scope of the present invention. The scope of the present invention is shown by the attached claims rather than the embodiments.

**Claims**

**1.** A field emission electrode (44, 131), which comprises
an electron emission film (1, 30, 43, 130) including a plurality of diamond fine grains (1a, 30a, 103a) and carbon (1b, 30b, 103b) which exists between the diamond fine grains,
**characterized in that**
sticks (104) are grown with said carbon (1b, 30b, 103b) as nuclei on a surface of the electron emission film from said carbon (1b, 30b, 103b) existing on the electron emission film between the diamond fine grains.

2. The field emission electrode according to claim 1,
   wherein the diamond fine grains have a grain diameter of 5nm to 10nm.

3. The field emission electrode according to claim 1 or 2,
   wherein the carbon has $sp^2$ bonds.

4. The field emission film according to any one of claims 1 to 3,
   wherein the electron emission film has a ratio (D-band intensity)/(G-band intensity) of 2.5 to 2.7.

5. The field emission electrode according to any one of claims 1 to 4,
   wherein the sticks are formed of carbon.

6. The field emission electrode according to any one of claims 1 to 5,
   wherein the sticks have a needle-like shape, and stand on the surface of the electron emission film.

7. The field emission electrode according to any one of claims 1 to 6,
   wherein the sticks are formed on the surface of the electron emission film with a density of 5000 to 75000sticks/mm$^2$.

8. The field emission electrode according to any one of claims 1 to 7,
   wherein dust-like carbon is formed around the sticks.

9. The field emission electrode according to claim 1,
   wherein electric resistivity of the electron emission film is 1 kΩ·cm to 18Ω·cm.

10. The field emission electrode according to claim 1,
    wherein the electron emission film is formed on a layer of carbon-nanowall (32, 132) which is formed on a substrate (2, 31, 42, 101).

11. The field emission electrode according to claim 1,
    wherein the diamond fine grains cause field emission by tunnel effect.

12. The field emission electrode, according to claim 1,
    wherein the plurality of diamond fine grains and have a ratio (D-band intensity)/(G-band intensity) of 2.5 to 2.7.

13. A manufacturing method of a field emission electrode (44, 131) according to claim 1, which comprises an electron emission film (1, 30, 43, 130) including a plurality of diamond fine grains (1a, 30a, 103a) and carbon (1b, 30b, 103b) which exists between the diamond fine grains,
    **characterized by** comprising:

    a step of supplying a material gas which includes a compound containing carbon in its composition into a process chamber to generate plasma in the process chamber, thereby forming the electron emission film including the plurality of diamond fine grains, the carbon, and sticks disposed on a surface of the electron emission film.

14. The manufacturing method of a field emission electrode according to claim 13,
    wherein the carbon has $sp^2$ bonds.

15. The manufacturing method of a field emission electrode according to claim 14,
    wherein the sticks are grown from the carbon of the electron emission film as nuclei.

16. The manufacturing method of a field emission electrode according to any one of claims 13 to 15,
    wherein the sticks are formed on the surface of the electron emission film with a density of 5000 to 75000 sticks/ mm$^2$.

17. A manufacturing method of a field emission electrode according to claim 13, further comprising:

    a step of supplying a material gas which includes carbon in its composition into the process chamber to generate plasma in the process chamber, and forming a layer of carbon-nanowall on a substrate in the process chamber before the step of forming the electron emission film; and
the step of forming the electron emission film including the plurality of diamond fine grains on the layer of carbon-nanowall.

**18.** The manufacturing method of a field emission electrode according to claim 13,
wherein the electron emission film has a ratio (D-band intensity)/(G-band intensity) of 2.5 to 2.7.

**19.** The manufacturing method of a field emission electrode according to claim 17,
wherein temperature of a surface of the electron emission film when the electron emission film is being formed is lower than temperature of a surface of the layer of carbon-nanowall when the layer of carbon-nanowall is being formed.

**20.** An electronic device (11, 21, 41, 141), which comprises:

a field emission electrode (44, 131) according to claim 1;
an opposite electrode which is formed so as to face the field emission electrode; and
a fluorescent film which emits light by electrons emitted from the field emission electrode.

**21.** The electronic device according to claim 20,
wherein the carbon has $sp^2$ bonds.

**22.** The electronic device according to claim 20 or 21,
wherein the sticks are formed of carbon.

**23.** The electronic device according to any one of claims 20 to 22,
wherein the sticks have a needle-like shape, and stand on the surface of the electron emission film.

**24.** The electronic device according to any one of claims 20 to 23,
wherein the sticks are formed on the surface of the electron emission film with a density of 5000 to 75000sticks/mm$^2$.

**25.** The electronic device according to any one of claims 20 to 24,
wherein dust-like carbon is formed, around the sticks.

**26.** An electronic device according to claim 20,
wherein the plurality of diamond fine grains have a grain diameter of 5nm to 10nm.

**27.** The electronic device according to claim 20,
wherein electric resistivity of the electron emission film is 1kΩ·cm to 18kΩ·cm.

**28.** The electronic device according to claim 20,
wherein the diamond fine grains cause field emission by tunnel effect.

**29.** The electronic device according to claim 20,
wherein the electron emission film has a ratio (D-band intensity)/(G-band intensity) of 2.5 to 2.7.

**30.** The electronic device according to claim 20,
wherein the electron emission film is formed on a layer of carbon-nanowall.

**Patentansprüche**

**1.** Feldemissions-Elektrode (44, 131), die umfasst:

einen Elektronenemissions-Film (1, 30, 43, 130), der eine Vielzahl von Diamant-Feinkörnern (1a, 30a, 103a) und Kohlenstoff (1b, 30b, 103b) enthält, der zwischen den Diamant-Feinkörnern vorhanden ist,
**dadurch gekennzeichnet, dass**
Stängel (104) mit dem Kohlenstoff (1b, 30b, 103b) als Kristallisationskeime an einer Oberfläche des Elektronenemissions-Films aus dem Kohlenstoff (1b, 30b, 103b) gezüchtet werden, der auf dem Elektronenemissions-Film zwischen den Diamant-Feinkörnern vorhanden ist.

**2.** Feldemissions-Elektrode nach Anspruch 1,
wobei die Diamant-Feinkörner einen Korndurchmesser von 5 nm bis 10 nm haben.

**3.** Feldemissions-Elektrode nach Anspruch 1 oder 2, wobei der Kohlenstoff $sp^2$-Bindungen hat.

**4.** Feldemissions-Film nach einem der Ansprüche 1 bis 3,
wobei der Elektronemissions-Film ein Verhältnis von D-Banden-Intensität zu G-Banden-Intensität von 2,5 bis 2,7 hat.

**5.** Feldemissions-Elektrode nach einem der Ansprüche 1 bis 4,
wobei die Stängel aus Kohlenstoff ausgebildet sind.

**6.** Feldemissions-Elektrode nach einem der Ansprüche 1 bis 5,
wobei die Stängel eine nadelartige Form haben und auf der Oberfläche des Elektronenemissions-Films stehen.

**7.** Feldemissions-Elektrode nach einem der Ansprüche 1 bis 6,
wobei die Stängel an der Oberfläche des Elektronenemissions-Films mit einer Dichte von 5.000 bis 75.000 Stängel/mm$^2$ ausgebildet sind.

**8.** Feldemissions-Elektrode nach einem der Ansprüche 1 bis 7,
wobei staubartiger Kohlenstoff um die Stängel herum ausgebildet ist.

**9.** Feldemissions-Elektrode nach Anspruch 1, wobei der spezifische elektrische Widerstand des Elektronenemissions-Films 1 k$\Omega\cdot$cm bis 18 k$\Omega\cdot$cm beträgt.

**10.** Feldemissions-Elektrode nach Anspruch 1,
wobei der Elektronenemissions-Film auf einer Schicht aus Kohlenstoff-Nanowand (32, 132) ausgebildet ist, die auf einem Substrat (2, 31, 42, 101) ausgebildet ist.

**11.** Feldemissions-Elektrode nach Anspruch 1,
wobei die Diamant-Feinkörner Feldemission durch Tunneleffekt bewirken.

**12.** Feldemissions-Elektrode nach Anspruch 1,
wobei die Vielzahl von Diamant-Feinkörnern ein Verhältnis von D-Banden-Intensität zu G-Banden-Intensität von 2,5 bis 2,7 haben.

**13.** Verfahren zum Herstellen einer Feldemissions-Elektrode (44, 131) nach Anspruch 1, die einen Elektronenemissions-Film (1, 30, 43, 130) umfasst, der eine Vielzahl von Diamant-Feinkörnern (1a, 30a, 103a) und Kohlenstoff (1b, 30b, 103b) enthält, der zwischen den Diamant-Feinkörnern vorhanden ist,
**dadurch gekennzeichnet, dass** es umfasst:

einen Schritt des Zuführens eines Materialgases, das eine Verbindung enthält, die Kohlenstoff in ihrer Zusammensetzung beinhaltet, in eine Prozesskammer, um Plasma in der Prozesskammer zu erzeugen und so den Elektronenmissions-Film auszubilden, der die Vielzahl von Diamant-Feinkörnern, den Kohlenstoff und Stängel enthält, die an einer Oberfläche des Elektronenemissions-Films angeordnet sind.

**14.** Verfahren zum Herstellen einer Feldemissions-Elektrode nach Anspruch 13,
wobei der Kohlenstoff $sp^2$-Bindungen hat.

**15.** Verfahren zum Herstellen einer Feldemissions-Elektrode nach Anspruch 14,
wobei die Stängel aus dem Kohlenstoff des Elektronenemissions-Films als Kristallisationskeime gezüchtet werden.

**16.** Verfahren zum Herstellen einer Feldemissions-Elektrode nach einem der Ansprüche 13 bis 16,
wobei die Stängel an der Oberfläche des Elektronenemissions-Films mit einer Dichte von 5.000 bis 75.000 Stängeln/mm$^2$ ausgebildet sind.

**17.** Verfahren zum Herstellen einer Feldemissions-Elektrode nach Anspruch 13, das des Weiteren umfasst:

einen Schritt des Zuführens eines Materialgases, das Kohlenstoff in seiner Zusammensetzung enthält, in die Prozesskammer, um Plasma in der Prozesskammer zu erzeugen, sowie des Ausbildens einer Schicht aus Kohlenstoff-Nanowand auf einem Substrat in der Prozesskammer vor dem Schritt des Ausbildens des Elektronenemissions-Films; und

den Schritt des Ausbildens des Elektronenemissions-Films, der die Vielzahl von Diamant-Feinkörnern auf der Schicht aus Kohlenstoff-Nanowand enthält.

18. Verfahren zum Herstellen einer Feldemissions-Elektrode nach Anspruch 13,
wobei der Elektronenemissions-Film ein Verhältnis von D-Banden-Intensität zu G Banden-Intensität von 2,5 bis 2,7 hat.

19. Verfahren zum Herstellen einer Feldemissions-Elektrode nach Anspruch 17,
wobei die Temperatur einer Oberfläche des Elektronenemissions-Films beim Ausbilden des Elektronenemissions-Films niedriger ist als die Temperatur einer Oberfläche der Schicht aus Kohlenstoff-Nanowand, wenn die Schicht aus Kohlenstoff-Nanowand ausgebildet wird.

20. Elektronische Vorrichtung (11, 21, 41, 141), die umfasst:

eine Feldemissions-Elektrode (44, 131) nach Anspruch 1,
eine gegenüberliegende Elektrode, die so ausgebildet ist, dass sie der Feldemissions-Elektrode zugewandt ist; und
einen fluoreszierenden Film, der Licht durch Elektronen emittiert, die von der Feldemissions-Elektrode emittiert werden.

21. Elektronische Vorrichtung nach Anspruch 20,
wobei der Kohlenstoff $sp^2$-Bindungen hat.

22. Elektronische Vorrichtung nach Anspruch 20 oder 21, wobei die Stängel aus Kohlenstoff ausgebildet sind.

23. Elektronische Vorrichtung nach einem der Ansprüche 20 bis 22,
wobei die Stängel eine nadelartige Form haben und auf der Oberfläche des Elektronenemissions-Films stehen.

24. Elektronische Vorrichtung nach einem der Ansprüche 20 bis 23,
wobei die Stängel an der Oberfläche des Elektronenemissions-Films mit einer Dichte von 5.000 bis 75.000 Stängel/mm$^2$ ausgebildet sind.

25. Elektronische Vorrichtung nach einem der Ansprüche 20 bis 24,
wobei staubartiger Kohlenstoff um die Stängel herum ausgebildet ist.

26. Elektronische Vorrichtung nach Anspruch 20,
wobei die Diamant-Feinkörner einen Korndurchmesser von 5 nm bis 10 nm haben.

27. Elektronische Vorrichtung nach Anspruch 20, wobei der spezifische elektrische Widerstand des Elektronenemissions-Films 1 kΩ·cm bis 18 kΩ·cm beträgt.

28. Elektronische Vorrichtung nach Anspruch 20,
wobei der Elektronenemissions-Film auf einer Schicht aus Kohlenstoff-Nanowand (32, 132) ausgebildet ist, die auf einem Substrat (2, 31, 42, 101) ausgebildet ist.

29. Elektronische Vorrichtung nach Anspruch 20,
wobei die Diamant-Feinkörner Feldemission durch Tunneleffekt bewirken.

30. Elektronische Vorrichtung nach Anspruch 20,
wobei der Elektronenemissions-Film auf einer Schicht aus Kohlenstoff-Nanowand ausgebildet ist.

**Revendications**

1.  Electrode à émission de champ (44, 131), laquelle comprend
    un film à émission d'électrons (1, 30, 43, 130) comportant plusieurs grains fins de diamant (1a, 30a, 103a) et du carbone (1b, 30b, 103b) qui existe entre les grains fins de diamant,
    **caractérisée en ce que**
    des baguettes (104) croissent avec ledit carbone (1b, 30b, 103b) sous forme de noyaux sur une surface du film à émission d'électrons à partir dudit carbone (1b, 30b, 103b) existant sur le film à émission d'électrons entre les grains fins de diamant.

2.  Electrode à émission de champ selon la revendication 1,
    dans laquelle les grains fins de diamant présentent un diamètre de grain de 5 nm à 10 nm.

3.  Electrode à émission de champ selon la revendication 1 ou 2, dans laquelle le carbone présente des liaisons $sp^2$.

4.  Film à émission de champ selon l'une quelconque des revendications 1 à 3,
    dans lequel le film à émission d'électrons présente un rapport (intensité dans la bande D)/(intensité dans la bande G) de 2,5 à 2,7.

5.  Electrode à émission de champ selon l'une quelconque des revendications 1 à 4,
    dans laquelle les baguettes sont formées de carbone.

6.  Electrode à émission de champ selon l'une quelconque des revendications 1 à 5,
    dans laquelle les baguettes présentent une forme aciculaire, et se situent sur la surface du film à émission d'électrons.

7.  Electrode à émission de champ selon l'une quelconque des revendications 1 à 6,
    dans laquelle les baguettes sont formées sur la surface du film à émission d'électrons avec une densité de 5 000 à 75 000 baguettes/mm $^2$

8.  Electrode à émission de champ selon l'une quelconque des revendications 1 à 7,
    dans laquelle du carbone analogue à de la poussière est formé autour des baguettes.

9.  Electrode à émission de champ selon la revendication 1,
    dans laquelle la résistivité électrique du film à émission d'électrons est de 1 kΩ·cm à 18 kΩ·cm.

10. Electrode à émission de champ selon la revendication 1,
    dans laquelle le film à émission d'électrons est formé sur une couche de nanoparoi en carbone (32, 132) qui est formée sur un substrat (2, 31, 42, 101).

11. Electrode à émission de champ selon la revendication 1,
    dans laquelle les grains fins de diamant entraînent une émission de champ par effet tunnel.

12. Electrode à émission de champ selon la revendication 1,
    dans laquelle les grains fins de diamant présentent un rapport (intensité dans la bande D)/(intensité dans la bande G) de 2,5 à 2,7.

13. Procédé de fabrication d'une électrode à émission de champ (44, 131) selon la revendication 1, laquelle comprend
    un film à émission d'électrons (1, 30, 43, 130) comportant plusieurs grains fins de diamant (1a, 30a, 103a) et du carbone (1b, 30b, 103b) qui existe entre les grains fins de diamant,
    **caractérisé en ce qu'**il comprend :

    une étape de fourniture d'un gaz qui comporte un composé contenant du carbone dans sa composition dans une chambre de traitement pour générer du plasma dans la chambre de traitement, en formant ainsi le film à émission d'électrons comportant les grains fins de diamant, le carbone, et des baguettes disposées sur une surface du film à émission d'électrons.

14. Procédé de fabrication d'une électrode à émission de champ selon la revendication 13,
    dans lequel le carbone présente des liaisons $sp^2$.

15. Procédé de fabrication d'une électrode à émission de champ selon la revendication 14,
dans lequel les baguettes croissent à partir du carbone du film à émission d'électrons sous forme de noyaux.

16. Procédé de fabrication d'une électrode à émission de champ selon l'une quelconque des revendications 13 à 15,
dans lequel les baguettes sont formées sur la surface du film à émission d'électrons avec une densité de 5 000 à
75 000 baguettes/mm$^2$.

17. Procédé de fabrication d'une électrode à émission de champ selon la revendication 13, comprenant en outre :

une étape de fourniture d'un gaz qui comporte du carbone dans sa composition dans la chambre de traitement
pour générer du plasma dans la chambre de traitement, et la formation d'une couche de nanoparoi en carbone
sur un substrat dans la chambre de traitement avant l'étape de formation du film à émission d'électrons ; et
l'étape de formation du film à émission d'électrons comportant les grains fins de diamant sur la couche de
nanoparoi en carbone.

18. Procédé de fabrication d'une électrode à émission de champ selon la revendication 13,
dans lequel le film à émission d'électrons présente un rapport (intensité dans la bande D)/(intensité dans la bande
G) de 2,5 à 2,7.

19. Procédé de fabrication d'une électrode à émission de champ selon la revendication 17,
dans lequel la température d'une surface du film à émission d'électrons lorsque le film à émission d'électrons est
en cours de formation est inférieure à la température d'une surface de la couche de nanoparoi en carbone lorsque
la couche de nanoparoi en carbone est en cours de formation.

20. Dispositif électronique (11, 21, 41, 141), lequel comprend :

une électrode à émission de champ (44, 131) selon la revendication 1 ;
une électrode opposée qui est formée de manière à être dirigée vers l'électrode à émission de champ ; et
un film fluorescent qui émet de la lumière par des électrons émis par l'électrode à émission de champ.

21. Dispositif électronique selon la revendication 20,
dans lequel le carbone présente des liaisons sp$^2$.

22. Dispositif électronique selon la revendication 20 ou 21,
dans lequel les baguettes sont formées de carbone.

23. Dispositif électronique selon l'une quelconque des revendications 20 à 22,
dans lequel les baguettes présentent une forme aciculaire, et se situent sur la surface du film à émission d'électrons.

24. Dispositif électronique selon l'une quelconque des revendications 20 à 23,
dans lequel les baguettes sont formées sur la surface du film à émission d'électrons avec une densité de 5 000 à
75 000 baguettes/mm$^2$.

25. Dispositif électronique selon l'une quelconque des revendications 20 à 24,
dans lequel du carbone analogue à de la poussière est formé autour des baguettes.

26. Dispositif électronique selon la revendication 20,
dans lequel les grains fins de diamant présentent un diamètre de grain de 5 nm à 10 nm.

27. Dispositif électronique selon la revendication 20,
dans lequel la résistivité électrique du film à émission d'électrons est de 1 kΩ·cm à 18 kΩ·cm.

28. Dispositif électronique selon la revendication 20,
dans lequel les grains fins de diamant entraînent une émission de champ par effet tunnel.

29. Dispositif électronique selon la revendication 20,
dans lequel le film à émission d'électrons présente un rapport (intensité dans la bande D)/(intensité dans la bande
G) de 2,5 à 2,7.

**30.** Dispositif électronique selon la revendication 20,
dans lequel le film à émission d'électrons est formé sur une couche de nanoparoi en carbone.

# FIG. 1

~1

# FIG. 2

# FIG. 3

# FIG. 4

## FIG. 5

# FIG. 6

# FIG. 7

# FIG. 8

# FIG. 9

RESISTIVITY:6.2kΩcm

# FIG. 10

# FIG. 11

# FIG. 12

# FIG. 13

# FIG. 14

# FIG. 15

## FIG. 16

## FIG. 17

# FIG. 18

# FIG. 19

# FIG. 20

# FIG. 21

## FIG. 22

## FIG. 23A

## FIG. 23B

## FIG. 24A

P(2)

P(0)

P(−3)

## FIG. 24B

## FIG. 24C    FIG. 24D    FIG. 24E

## FIG. 25

RATIO
(CARBON HAVING SP3 BONDS)/
(CARBON HAVING SP2 BONDS)

2.5

2.0

1.5

1.0

0.5

0.0

| −3 | −2 | −1 | 0 | 1 | 2 |
| P(−3) | P(−2) | P(−1) | P(0) | P(1) | P(2) |

RELATIVE POSITION (mm)

## FIG. 26

## FIG. 27A

## FIG. 27B

## FIG. 27C

## FIG. 27D

# FIG. 28

# FIG. 29

# FIG. 30

130

132

# FIG. 31

# FIG. 32

# FIG. 33

## FIG. 34

## FIG. 35

## FIG. 36

## FIG. 37

## FIG. 38

## FIG. 39

# FIG. 40

FIG. 41A

FIG. 41B

## FIG. 42A

## FIG. 42B

# FIG. 43

# FIG. 44A

# FIG. 44B

FIG. 45A

FIG. 45B

FIG. 46A

FIG. 46B

# FIG. 47A

# FIG. 47B

# FIG. 48A

# FIG. 48B

# FIG. 49

# FIG. 50

FIG. 51C

FIG. 51D

ELECTRON EMISSION
FILM INCLUDING
NANO-DIAMOND FINE
GRAINS

CARBON-
NANOWALL FILM

FIG. 51A

FIG. 51B

FIG. 52A

FIG. 52C

## FIG. 52B

## FIG. 52D

ELECTRON EMISSION
FILM INCLUDING
NANO-DIAMOND FINE
GRAINS

CARBON-
NANOWALL FILM

FIG. 53A

FIG. 53C

FIG. 53B

FIG. 53D

ELECTRON EMISSION FILM
INCLUDING NANO-
DIAMOND FINE GRAINS

CARBON-NANOWALL FILM

# FIG. 54A

# FIG. 54B

# FIG. 54C

# FIG. 54D

ELECTRON
EMISSION FILM
INCLUDING NANO-
DIAMOND FINE GRAINS

CARBON-NANOWALL
FILM

# FIG. 54E

# FIG. 55

# FIG. 56

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003059391 A
- JP H9161655 B
- US 5900301 A
- US 2001024078 A
- US 2004178713 A

**Non-patent literature cited in the description**

- ENHANCED FIELD EMISSION CURRENT FROM DIAMOND-LIKE CARBON FILMS DEPOSITED BY LASER ABLATION OF C60 FULLERENE. **JAYAT-ISSA A H et al.** JOURNAL OF PHYSICS D. APPLIED PHYSICS. IOP PUBLISHING, 1999, vol. 32, 1443-1446